# EUROPEAN PATENT SPECIFICATION

(11) **EP 4 329 345 B1**
(45) Date of publication and mention of the grant of the patent: **24.09.2025**
(21) Application number: 21943375.2
(22) Date of filing: 31.05.2021
(51) Int. Cl.: H04W 60/00, H04W 36/00, H04W 8/26

(54) **TAG MANAGEMENT METHOD AND RELATED APPARATUS**
ETIKETTENVERWALTUNGSVERFAHREN UND ZUGEHÖRIGE VORRICHTUNG
PROCÉDÉ DE GESTION D'ÉTIQUETTE ET APPAREIL ASSOCIÉ

(43) Date of publication of application: 28.02.2024
(73) Proprietor: Huawei Technologies Co., Ltd., Longgang Shenzhen, Guangdong 518129 (CN)
(72) Inventor: XU, Yishan, Shenzhen, Guangdong 518129 (CN); ZHU, Hualin, Shenzhen, Guangdong 518129 (CN); GUO, Longhua, Shenzhen, Guangdong 518129 (CN); ZHU, Haoren, Shenzhen, Guangdong 518129 (CN)
(74) Representative: MERH-IP Matias Erny Reichl Hoffmann Patentanwälte PartG mbB
(86) International application number: PCT/CN2021/097129
(87) International publication number: WO 2022/251993

(56) References cited:
- EP-A1- 3 691 356
- WO-A1-2018/205114
- WO-A1-2019/063098
- CN-A- 108 024 296
- CN-A- 112 312 539
- CN-A- 112 866 932
- US-A1- 2020 228 936
- US-A1- 2021 153 010

## Description

### TECHNICAL FIELD

This application relates to the field of communication technologies, and in particular, to a tag management method and a related apparatus.

### BACKGROUND

A passive or semi-active internet of things technology is one of automatic identification technologies. A reader (Reader) performs contactless bidirectional data communication in a wireless radio frequency manner, and reads or writes a tag (Tag) in the wireless radio frequency manner, to identify a target and exchange data.

A passive or semi-active internet of things system uses a dedicated spectrum. When both the passive or semi-active internet of things system and a cellular network need to be deployed, two independent networks need to be separately constructed and maintained, and costs are high. The costs may be greatly reduced when the cellular network and the passive or semi-active internet of things technology (or a passive or semi-active internet of things network architecture) converge.

In a scenario in which the cellular network and the passive or semi-active internet of things technology converge, a network side cannot learn of a status of a passive tag in real time, and consequently, a mechanism in which the cellular network manages a status of a tag is lacked.
Document EP3691356A1 relates to a method for transmitting and receiving signals related to switching from 3rd Generation Partnership Project (3GPP) access to a 5th Generation System (5GS) within an Evolved Packet System (EPS) in a wireless communication network. The method includes a step in which a second Access and Mobility Management Function (AMF) receives a message related to a registration request, including a first 5G Globally Unique Temporary Identifier (5G-GUTI), from a User Equipment (UE) that accesses non-3GPP services through the 5GS and 3GPP services through the EPS, and a step in which the second AMF transmits a message related to a registration acceptance, including a second 5G-GUTI, to the UE. The first 5G-GUTI contains ID information about the first AMF that serves the non-3GPP access of the UE, while the second 5G-GUTI contains ID information about the second AMF, which serves both the non-3GPP access and the 3GPP access of the UE.

### SUMMARY

To resolve a problem of managing a status of a tag in a scenario in which a passive or semi-active internet of things system and a cellular network converge, so that a network side learns of a status of a passive tag in a timely manner, a first aspect of embodiments of this application provides a tag management method, including: The present invention is defined by the appended claims. In the following, parts of the description and drawings referring to former embodiments which do not necessarily comprise all features to implement embodiments of the claimed invention are understood to not represent embodiments of the invention but to relate to examples useful for understanding the embodiments of the invention.

A first mobility management function receives a registration request message sent by an access network device. The registration request message is used to request to register a tag in a core network. The first mobility management function obtains identification information of a second mobility management function from a unified data management function based on the registration request message. The second mobility management function stores context information of the tag. The first mobility management function obtains the context information of the tag from the second mobility management function. The first mobility management function establishes a connection for the tag based on the context information of the tag.

According to the method in the first aspect, the first mobility management function obtains the context information of the tag from a mobility management function (for example, the second mobility management function) that serves the tag, so that the first mobility management function can continue to use some or all context information of the tag, and there is no need to completely re-establish a context of the tag. Secure context information of the tag is reused, and access authentication does not need to be performed on the tag again, so that a network manages a status of the tag. The second mobility management function may also release the context information of the tag, to save communication resources.

With reference to the first aspect, in a possible implementation of the first aspect, the context information of the tag includes information such as a key of the tag, a secure algorithm (for example, an air interface encryption and integrity protection algorithm), a security capability of the tag, a counter value, or a timer value. This is not limited herein. That the first mobility management function establishes a connection for the tag based on the context information of the tag includes: establishing a secure connection for the tag based on secure context information (for example, one or more of the key of the tag, the secure algorithm, and the security capability of the tag) in the context information. The secure connection includes an air interface secure connection and a non-access stratum secure connection. Optionally, the context information of the tag further includes context information of a session. Specifically, the context information of the session includes a session identifier, related information about a session management function that provides a service for the session, or the like. The first mobility management function updates a user plane connection for the tag based on the context information of the session. For example, the first mobility management function re-establishes or updates an N3 user plane connection for the tag.

Further, the registration request message may be non-access stratum signaling based on a non-access stratum (Non-Access Stratum, NAS) protocol stack, and an existing case in which the registration request message is sent by using non-access stratum signaling on a network side is still used, to reduce a change to the network side, and effectively ensure information security. The registration request message may alternatively be next-generation application protocol signaling based on a next-generation application protocol (Next-generation Application Protocol, NGAP) protocol stack. This is not limited herein.

Further, that the second mobility management function stores context information of the tag may also be understood as that the second mobility management function serves the tag, or the second mobility management function serves the tag once. With reference to the first aspect, in a possible implementation of the first aspect, the first mobility management function does not execute an authentication process of the tag based on the context information of the tag, to avoid performing frequent authentication in a process in which the tag accesses a new access network device in a moving process, and save network resources.

With reference to the first aspect, in a possible implementation of the first aspect, the registration request message includes identification information of the tag, the identification information of the tag includes a subscription concealed identifier of the tag, and a part of the subscription concealed identifier of the tag is plaintext information; and that the first mobility management function obtains the context information of the tag from the second mobility management function includes: The first mobility management function obtains, from the second mobility management function, the context information that is of the tag and that is indicated by the plaintext information.

With reference to the first aspect, in a possible implementation of the first aspect, the plaintext information includes one or more of an electronic product code of the tag, a unique identifier of the tag, a permanent identifier of the tag, an external identifier of the tag, or a temporary identifier of the tag.

The electronic product code of the tag may be an electronic product code (Electronic Product Code, EPC), for example, "urn:epc:id:sgtin:CompanyPrefix.ItemRefAndIndicator.SerialNumber". Herein, "sgtin" indicates that an item or an object identified by the electronic product code is a commodity; "CompanyPrefix" is used to identify a management entity or a representative, and may be understood as being used to identify an enterprise (or a manufacturer); "ItemRefAndIndicator" may also be referred to as "Item Reference", and is used to identify a specific object type, for example, clothes, articles of daily use, or food; and "SerialNumber", that is, a serial number, is used to identify the item or the object. The electronic product code of the tag may alternatively be a variant of the electronic product code. This is not limited herein.

The unique identifier of the tag may be a media access control address (Media Access Control Address, MAC) of the tag.

The permanent identifier of the tag may be information such as a subscription permanent identifier (subscription permanent identifier, SUPI) of the tag, or a credential (credential) of the tag.

The external identifier of the tag may be another identifier allocated by the access network device or another external device (for example, a server) to the tag, for example, a generic public subscription identifier (generic public subscription identifier, GPSI) of the tag.

The temporary identifier of the tag may be a temporarily used identifier allocated by the access network device or another external device (for example, the server) to the tag.

The identification information of the tag may be the subscription concealed identifier (subscription concealed identifier, SUCI). The subscription concealed identifier is identification information generated after the subscription permanent identifier is encrypted.

In this embodiment of this application, a mobility management network element may obtain identification information of a second mobility management network element from the unified data management function based on identification information of a tag in a registration message. There are a plurality of implementations of the identification information of the tag, to improve implementation flexibility of this solution.

With reference to the first aspect, in a possible implementation of the first aspect, the identification information of the tag includes one or more of an electronic product code of the tag, a unique identifier of the tag, a permanent identifier of the tag, an external identifier of the tag, a temporary identifier of the tag, or a subscription concealed identifier of the tag. Identification information that is of a tag and that can be used in a cellular network includes one or more of the following: a unique identifier of the tag, a permanent identifier of the tag, an external identifier of the tag, a temporary identifier of the tag, or an SUCI of the tag.

With reference to the first aspect, in a possible implementation of the first aspect, the registration request message further includes first indication information, the first indication information indicates to query whether there is a mobility management function that stores the context information of the tag, and that the first mobility management function obtains identification information of a second mobility management function from a unified data management function based on the registration request message includes: The first mobility management function obtains the identification information of the second mobility management function from the unified data management function based on the first indication information.

Specifically, the first mobility management function queries, in the unified data management function based on the first indication information, whether there is a mobility management function that stores the context information of the tag. If there is a mobility management function that stores the context information of the tag, the first mobility management function obtains the identification information of the second mobility management function.

Further, the first indication information may further indicate that a registration status of the tag needs to be queried, or the first indication information indicates that whether there is a mobility management function that serves the tag needs to be queried. In a possible implementation, the first indication information is registration check indication (registration check indication, RCI) information.

With reference to the first aspect, in a possible implementation of the first aspect, that the first mobility management function obtains identification information of a second mobility management function from a unified data management function includes: The first mobility management function sends a query message to the unified data management function, where the query message includes the identification information of the tag; and the first mobility management function receives permanent identification information of the tag and the identification information of the second mobility management function from the unified data management function. That the first mobility management function obtains the context information of the tag from the second mobility management function includes: The first mobility management function obtains the context information of the tag from the second mobility management function based on the permanent identification information of the tag and the identification information of the second mobility management function.

With reference to the first aspect, in a possible implementation of the first aspect, the query message may include the identification information of the tag.

Specifically, the unified data management function obtains a corresponding subscription permanent identifier based on the identification information of the tag. The unified data management function searches, based on the subscription permanent identifier, for a mobility management function that provides a service for the tag. Further, that the unified data management function obtains a corresponding subscription permanent identifier based on the identification information of the tag includes: The unified data management function maps the identification information of the tag to the corresponding subscription permanent identifier.

For example, when the query message includes the subscription concealed identifier of the tag, the unified data management function obtains a subscription permanent identifier corresponding to the subscription concealed identifier. The unified data management function stores the subscription permanent identifier and related context information of the subscription permanent identifier, and the context information includes but is not limited to a registration status of a tag corresponding to the subscription permanent identifier, related information about a network function (or referred to as a network element) that serves the tag, and the like. The related information about the network function includes identification information of the network function and/or address information of the network function.

Further, that the unified data management function obtains a subscription permanent identifier corresponding to the subscription concealed identifier includes: The unified data management function maps the subscription concealed identifier to the corresponding subscription permanent identifier.

In a possible implementation, the unified data management function queries a registration status of the subscription permanent identifier (also referred to as a tag corresponding to the subscription permanent identifier). If the permanent identifier is registered, the unified data management function queries a mobility management function that serves the subscription permanent identifier, and feeds back identification information of the mobility management function to the mobility management function (the first mobility management function) that makes a query.

For example, when the query message includes a public subscription identifier of the tag, the unified data management function obtains a corresponding subscription permanent identifier based on the public subscription identifier. In this embodiment of this application, the first mobility management function sends the query message to the unified data management function, to obtain a second mobility management function that provides a service for the tag. Further, the first mobility management function obtains the context information of the tag from the second mobility management function.

With reference to the first aspect, in a possible implementation of the first aspect, the first mobility management function sends the query message to the unified data management function. The query message is used to query whether there is a second mobility management function that stores the context information of the tag. If there is no second mobility management function that stores the context information of the tag, the first mobility management function receives third indication information sent by the unified data management function. The third indication information indicates that there is no second mobility management function that currently stores the context information of the tag. The first mobility management function executes a procedure of registering the tag based on the third indication information.

With reference to the first aspect, in a possible implementation of the first aspect, the query message includes the identification information of the tag and/or the first indication information.

With reference to the first aspect, in a possible implementation of the first aspect, that the first mobility management function obtains identification information of a second mobility management function from a unified data management function includes:

The first mobility management function sends the query message to the unified data management function. The query message includes the first indication information. The first mobility management function receives the identification information of the second mobility management function from the unified data management function.

Specifically, the unified data management function queries, based on the identification information of the tag in the query message and/or the first indication information, whether there is a second mobility management function that stores the context information of the tag. If the unified data management function finds that there is a second mobility management function that stores the context information of the tag, the first mobility management function receives the identification information of the second mobility management function from the unified data management function.

With reference to the first aspect, in a possible implementation of the first aspect, the second mobility management function is the same as the first mobility management function.

With reference to the first aspect, in a possible implementation of the first aspect, after the first mobility management function obtains the context information of the tag, the first mobility management function sends the context information of the tag to the access network device. After obtaining the context information of the tag, the access network device can establish an air interface secure channel with the tag based on the context information of the tag.

With reference to the first aspect, in a possible implementation of the first aspect, before the first mobility management function obtains the identification information of the second mobility management function from the unified data management function based on the registration request message, the first mobility management function determines that the first mobility management function does not store the context information of the tag. The first mobility management function determines that the context information of the tag is not stored locally, and then obtains the identification information of the second mobility management function from the unified data management function, to save communication resources.

According to a second aspect, an embodiment of this application provides a tag management method, including:

A first mobility management function receives a registration request message sent by an access network device. The registration request message is used to request to register a tag in a core network, the registration request message includes a subscription concealed identifier of the tag, a part of the subscription concealed identifier of the tag is plaintext information, and the plaintext information indicates the tag. The first mobility management function obtains, from the first mobility management function, context information that is of the tag and that is indicated by the plaintext information.

According to the method in the second aspect, the first mobility management obtains, based on the plaintext information in the subscription concealed identifier of the tag, the context information of the tag from a mobility management function (for example, the first mobility management function) that serves the tag, so that the first mobility management function can continue to use some or all context information of the tag, and there is no need to completely re-establish a context of the tag. Secure context information of the tag is reused, and access authentication does not need to be performed on the tag again, so that a network manages a status of the tag, to save communication resources.

Further, the registration request message may be non-access stratum signaling based on a non-access stratum (Non-Access Stratum, NAS) protocol stack, and an existing case in which the registration request message is sent by using non-access stratum signaling on a network side is still used, to reduce a change to the network side, and effectively ensure information security. The registration request message may alternatively be next-generation application protocol signaling based on a next-generation application protocol (Next-generation Application Protocol, NGAP) protocol stack. This is not limited herein. With reference to the second aspect, in a possible implementation of the second aspect, the plaintext information includes one or more of an electronic product code of the tag, a unique identifier of the tag, a permanent identifier of the tag, an external identifier of the tag, or a temporary identifier of the tag.

In this embodiment of this application, there are a plurality of implementations of the identification information of the tag, to improve implementation flexibility of this solution.

With reference to the second aspect, in a possible implementation of the second aspect, the registration request message further includes second indication information, and the second indication information indicates the first mobility management function to query whether the context information of the tag is stored. That the first mobility management function obtains, from the first mobility management function, context information that is of the tag and that is indicated by the plaintext information includes: The first mobility management function obtains, from the first mobility management function based on the second indication information, the context information that is of the tag and that is indicated by the plaintext information.

In a possible implementation, the second indication information may further indicate that a registration status of a tag needs to be queried. In a possible implementation, the second indication information is registration check indication (registration check indication, RCI) information. In this embodiment of this application, the first mobility management function obtains the context information of the tag based on the second indication information, to prevent the first mobility management function from analyzing whether each received registration request message is to obtain the context information of the tag. In this way, an operation process is simplified, and resources are saved.

With reference to the second aspect, in a possible implementation of the second aspect, that the first mobility management function obtains context information of the tag from the first mobility management function includes: The first mobility management function determines whether the first mobility management function stores the context information of the tag; and when the first mobility management function stores the context information of the tag, the first mobility management function obtains the context information of the tag from the first mobility management function based on the registration request message.

With reference to the second aspect, in a possible implementation of the second aspect, when the first mobility management function does not store the context information of the tag, the method further includes: The first mobility management function sends a query message to a unified data management function. The query message is used to query whether there is a second mobility management function that stores the context information of the tag. If there is a second mobility management function that stores the context information of the tag, the first mobility management function receives permanent identification information of the tag and identification information of the second mobility management function that are sent by the unified data management function. The first mobility management function obtains the context information of the tag from the second mobility management function based on the permanent identification information of the tag and the identification information of the second mobility management function.

With reference to the second aspect, in a possible implementation of the second aspect, the query message may include the identification information of the tag.

Specifically, the unified data management function obtains a corresponding subscription permanent identifier based on the identification information of the tag. The unified data management function searches, based on the subscription permanent identifier, for a mobility management function that provides a service for the tag. Further, that the unified data management function obtains a corresponding subscription permanent identifier based on the identification information of the tag includes: The unified data management function maps the identification information of the tag to the corresponding subscription permanent identifier.

For example, when the query message includes the subscription concealed identifier of the tag, the unified data management function obtains a subscription permanent identifier corresponding to the subscription concealed identifier. The unified data management function stores the subscription permanent identifier and related context information of the subscription permanent identifier, and the context information includes but is not limited to a registration status of a tag corresponding to the subscription permanent identifier, related information about a network function (or referred to as a network element) that serves the tag, and the like. The related information about the network function includes identification information of the network function and/or address information of the network function.

Further, that the unified data management function obtains a subscription permanent identifier corresponding to the subscription concealed identifier includes: The unified data management function maps the subscription concealed identifier to the corresponding subscription permanent identifier.

In a possible implementation, the unified data management function queries a registration status of the subscription permanent identifier (also referred to as a tag corresponding to the subscription permanent identifier). If the permanent identifier is registered, the unified data management function queries a mobility management function that serves the subscription permanent identifier, and feeds back identification information of the mobility management function to the mobility management function (the first mobility management function) that makes a query.

For example, when the query message includes a public subscription identifier of the tag, the unified data management function obtains a corresponding subscription permanent identifier based on the public subscription identifier. In this embodiment of this application, the first mobility management function sends the query message to the unified data management function, to obtain a second mobility management function that provides a service for the tag. Further, the first mobility management function obtains the context information of the tag from the second mobility management function.

With reference to the second aspect, in a possible implementation of the second aspect, the query message includes the identification information of the tag and/or second indication information.

With reference to the second aspect, in a possible implementation of the second aspect, the context information of the tag includes a key of the tag. The context information of the tag may also be a variant of the key of the tag. This is not limited herein.

According to a third aspect, an embodiment of this application provides a tag management method, including:

A unified data management function receives a query message sent by a first mobility management function. The query message includes identification information of a tag. The unified data management function determines a second mobility management function based on the query message. The second mobility management function stores context information of the tag. The unified data management function sends identification information of the second mobility management function to the first mobility management function.

In this embodiment of this application, the unified data management function queries, based on the query message sent by the first mobility management function, whether there is a mobility management function that serves the tag, to obtain the context information of the tag. According to the method, a status of the tag is managed. The first mobility management function obtains the context information of the tag from a mobility management function (for example, the second mobility management function) that serves the tag, so that the first mobility management function can continue to use the context information of the tag, to avoid performing frequent authentication in a process in which the tag accesses a new access network device, and save communication resources.

With reference to the third aspect, in a possible implementation of the third aspect, the unified data management function queries a registration status of the tag. If the tag is in a non-registered state or a deregistered state, there is no mobility management function that serves the tag. Further, the unified data management function feeds back third indication information to the first mobility management function. The third indication information indicates that a query fails or no information is found.

With reference to the third aspect, in a possible implementation of the third aspect, the query message includes identification information of the tag, the identification information of the tag is used to identify the tag, and the identification information of the tag includes one or more of an electronic product code of the tag, a unique identifier of the tag, a permanent identifier of the tag, an external identifier of the tag, or a temporary identifier of the tag.

The identification information of the tag may alternatively be a subscription concealed identifier (subscription concealed identifier, subscription concealed identifier). The subscription concealed identifier is identification information generated after the subscription permanent identifier is encrypted.

When the identification information of the tag is the subscription concealed identifier, plaintext information included in the subscription concealed identifier may further indicate the tag.

In this embodiment of this application, there are a plurality of implementations of the identification information of the tag, to improve implementation flexibility of this solution.

With reference to the third aspect, in a possible implementation of the third aspect, the query message further includes first indication information, and the first indication information indicates to query whether there is a mobility management function that stores the context information of the tag. In a possible implementation, the first indication information indicates that a registration status of the tag needs to be queried, or the first indication information indicates that whether there is a mobility management function that serves the tag needs to be queried. In a possible implementation, the first indication information is registration check indication (registration check indication, RCI) information. In this embodiment of this application, whether there is a mobility management function that serves the tag may be further queried based on the first indication information, to improve implementation flexibility of this solution.

With reference to the third aspect, in a possible implementation of the third aspect, the identification information of the tag further includes the subscription concealed identifier of the tag, the subscription concealed identifier further includes plaintext information, and the plaintext information indicates the tag. Specifically, when the identification information that is of the tag and that is included in the registration request message is a subscription concealed identifier, the subscription concealed identifier includes plaintext information. The first mobility management function obtains the context information of the tag based on the plaintext information in the subscription concealed identifier. In this embodiment of this application, there are a plurality of implementations of the identification information of the tag, to improve implementation flexibility of this solution.

With reference to the third aspect, in a possible implementation of the third aspect, when the query message includes the subscription concealed identifier of the tag, the unified data management function determines permanent identification information of the tag based on the subscription concealed identifier of the tag in the query message; and the unified data management function sends the permanent identification information of the tag to the first mobility management function. The permanent identification information of the tag includes but is not limited to an electronic product code of the tag, a subscription permanent identifier, or a MAC address of the tag, so that the first mobility management function obtains the context information of the tag based on the permanent identification information of the tag.

With reference to the third aspect, in a possible implementation of the third aspect, the unified data management function sends the third indication information to the first mobility management function. The third indication information indicates that there is currently no second mobility management function that stores the context information of the tag. In a possible implementation, the unified data management function queries a registration status of the subscription permanent identifier. If the subscription permanent identifier is in a non-registered state or a deregistered state, there is no mobility management function that serves the subscription permanent identifier. Further, the unified data management function feeds back third indication information to the first mobility management function. The third indication information indicates that a query fails or no information is found.

With reference to the third aspect, in a possible implementation of the third aspect, the identification information of the second mobility management function includes address information of the second mobility management function, for example, an IP address of the second mobility management function, or a MAC address of the second mobility management function.

According to a fourth aspect, an embodiment of this application provides a tag management method. The method is applied to an Internet of things system, and the Internet of things system includes an access network device and a tag. The method includes: An access network device sends a request message. The request message indicates the tag to send a response message for the request message to the access network device. The access network device determines that a target tag is disconnected. The access network device releases context information of the target tag.

In this embodiment of this application, because a passive tag cannot actively send a signal to a network side, the network side cannot learn of connectivity of the tag in real time. The access network device sends the request message. The request message indicates the tag to send the response message for the request message to the access network device. The access network device performs statistics collection and determining based on the response message, to determine connectivity of the passive tag. If the tag does not return the response message in a plurality of inventorying events or does not return the response message for a long period of time, the network side determines that the tag is not in an area currently covered by the access network device or the tag is invalid, in other words, the network side considers that a current server temporarily does not need to obtain related information about the tag. Therefore, the access network device determines that the tag is the target tag, the target tag is disconnected, and the access network device does not need to store the context information of the tag for the target tag. Therefore, the access network device may initiate an access network release procedure of the target tag, so that the target tag enters an idle state, to save resources such as network side storage space.

With reference to the fourth aspect, in a possible implementation of the fourth aspect, the access network device broadcasts the request message, or the access network device sends the request message to the tag.

With reference to the fourth aspect, in a possible implementation of the fourth aspect, that the access network device determines that a target tag is disconnected includes: When the response message received by the access network device does not include identification information of the target tag, the access network device updates a first value corresponding to the target tag; and when the first value corresponding to the target tag reaches a first threshold, the access network device releases context information corresponding to the target tag.

Further, when the response message for the request message does not include the identification information of the target tag, the access network device updates the first value corresponding to the target tag. The identification information of the target tag includes but is not limited to one or more of an electronic product code of the tag, a unique identifier of the tag, a permanent identifier of the tag, an external identifier of the tag, a temporary identifier of the tag, or data information of the target tag. The following separately provides descriptions:

The electronic product code of the tag may be an electronic product code (Electronic Product Code, EPC), for example, "urn:epc:id:sgtin:CompanyPrefix.ItemRefAndIndicator.SerialNumber". Herein, "sgtin" indicates that an item or an object identified by the electronic product code is a commodity; "CompanyPrefix" is used to identify a management entity or a representative, and may be understood as being used to identify an enterprise (or a manufacturer); "ItemRefAndIndicator" may also be referred to as "Item Reference", and is used to identify a specific object type, for example, clothes, articles of daily use, or food; and "SerialNumber", that is, a serial number, is used to identify the item or the object.

The unique identifier of the tag may be a media access control address (Media Access Control Address, MAC) of the tag.

The permanent identifier of the tag may be information such as a subscription permanent identifier (subscription permanent identifier, SUPI) of the tag, or a credential (credential) of the tag.

The external identifier of the tag may be another identifier allocated by the access network device or another external device (for example, a server) to the tag, for example, a generic public subscription identifier (generic public subscription identifier, GPSI) of the tag. The temporary identifier of the tag may be a temporarily used identifier allocated by the access network device or another external device (for example, the server) to the tag.

The identification information of the target tag may alternatively be a subscription concealed identifier (subscription concealed identifier, SUCI). The subscription concealed identifier is identification information generated after the subscription permanent identifier is encrypted.

The identification information of the target tag may alternatively be a variant of the foregoing various identifiers. This is not limited herein.

For example, when tags managed by the access network device include a tag 1, a tag 2, a tag 3, and a tag 4, and the response message for the request message does not include the identification information of the target tag, for example, the tag 2 is the target tag, the response message that is for the request message and that is received by the access network device does not include identification information of the tag 2, and the access network device updates a first value corresponding to the tag 2. For example, in an initial state, the first value corresponding to the tag 2 is 0. When the response message that is for the request message and that is received by the access network device does not include identification information of the tag 2, the access network device updates the first value corresponding to the tag 2 to 1.

With reference to the fourth aspect, in a possible implementation of the fourth aspect, that the access network device determines that a target tag is disconnected includes: When the access network device does not receive the response message sent by the target tag, the access network device updates the first value corresponding to the target tag; and when the first value corresponding to the target tag reaches the first threshold, the access network device releases the context information corresponding to the target tag. Specifically, when the access network device does not receive the response message that is for the request message and that is sent by the target tag, the access network device updates the first value corresponding to the target tag. The response message that is for the request message and that is sent by the target tag includes the identification information of the target tag.

With reference to the fourth aspect, in a possible implementation of the fourth aspect, that the access network device determines that a target tag is disconnected includes: The access network device enables a timer. After the timer expires, when none of response messages received by the access network device includes the identification information of the target tag, the access network device determines that the target tag is disconnected.

Specifically, after the access network device sends the request message, the access network device enables the timer. The timer may be a timer at a granularity of a tag. For example, each tag found by the access network device through inventorying corresponds to one timer. After sending a request message, the access network device enables a timer corresponding to each tag. The timer may alternatively be a timer at a granularity of an access network device. For example, one timer is enabled each time after the access network device sends a request message.

In another possible implementation, after the access network device finds a tag for a first time through inventorying, the access network device enables a timer.

In another possible implementation, after the access network device finds a tag for a first time through inventorying, the access network device obtains context information of the tag. After the access network device obtains the context information of the tag, the access network device enables a timer. Specifically, the context information of the tag includes information such as a key of the tag, a secure algorithm (for example, an air interface encryption and integrity protection algorithm), a security capability of the tag, a counter value, or a timer value. This is not limited herein.

With reference to the fourth aspect, in a possible implementation of the fourth aspect, that the access network device determines that a target tag is disconnected includes: The access network device enables a timer; and after the timer expires, when the access network device does not receive the response message sent by the target tag, the access network device determines that the target tag is disconnected.

Further, after the timer expires, when the response message for the request message does not include the identification information of the target tag, the access network device determines that the target tag is disconnected, and the access network device releases the context information corresponding to the target tag. The identification information of the target tag includes but is not limited to one or more of an electronic product code of the tag, a unique identifier of the tag, a permanent identifier of the tag, an external identifier of the tag, or a temporary identifier of the tag.

For example, a countdown time period of the timer is 10 seconds or 70 seconds. When the timer expires, that is, when the countdown time period of the timer ends, if the response message that is for the request message and that is received by the access network device does not include the identification information of the target tag, the access network device determines that the target tag is disconnected, and the access network device releases the context information corresponding to the target tag. Specifically, N2 context information corresponding to the target tag is released, and the target tag enters an idle state (CM-IDLE state).

Optionally, the timer includes a deregistration timer and an implicit deregistration timer. The access network device enables the deregistration timer. The mobility management function enables the implicit deregistration timer.

With reference to the fourth aspect, in a possible implementation of the fourth aspect, the request message includes the identification information of the target tag.

With reference to the fourth aspect, in a possible implementation of the fourth aspect, the identification information of the target tag is one or more of an electronic product code of the target tag, a temporary identifier of the target tag, a unique identifier of the target tag, a permanent identifier of the target tag, an external identifier of the target tag, or data information of the target tag.

According to a fifth aspect, an embodiment of this application provides a communication apparatus, including:
a transceiver module, configured to receive a registration request message sent by an access network device, where the registration request message is used to request to register a tag in a core network.

The transceiver module is further configured to obtain identification information of a second access and management function from a unified data management function based on the registration request message. The second mobility management function stores context information of the tag.

The transceiver module is further configured to obtain the context information of the tag from the second mobility management function.

In a possible implementation, the registration request message includes identification information of the tag, the identification information of the tag includes a subscription concealed identifier of the tag, and a part of the subscription concealed identifier of the tag is plaintext information.

The transceiver module is specifically configured to obtain, from the second mobility management function, the context information that is of the tag and that is indicated by the plaintext information.

In a possible implementation, the plaintext information includes one or more of an electronic product code of the tag, a unique identifier of the tag, a permanent identifier of the tag, an external identifier of the tag, or a temporary identifier of the tag.

In a possible implementation, the transceiver module is specifically configured to send a query message to the unified data management function. The query message includes the identification information of the tag.

The transceiver module is specifically configured to receive permanent identification information of the tag and the identification information of the second mobility management function from the unified data management function.

The transceiver module is specifically configured to obtain the context information of the tag from the second mobility management function based on the permanent identification information of the tag and the identification information of the second mobility management function.

In a possible implementation, the registration request message further includes first indication information, and the first indication information indicates to query whether there is a mobility management function that stores the context information of the tag.

The transceiver module is specifically configured to obtain the identification information of the second mobility management function from the unified data management function based on the first indication information.

In a possible implementation, the transceiver module is specifically configured to send a query message to the unified data management function. The query message includes the first indication information.

The transceiver module is specifically configured to receive the identification information of the second mobility management function from the unified data management function.

In a possible implementation, the second mobility management function is the same as a first mobility management function.

In a possible implementation, the transceiver module is further configured to send the context information of the tag to the access network device.

In a possible implementation, a processing module is configured to determine that the first mobility management function does not store the context information of the tag.

In a possible implementation, the processing module is a processor.

In a possible implementation, the processing module is a processor, and the transceiver module is a transceiver.

According to a sixth aspect, an embodiment of this application provides a communication apparatus, including:
a transceiver module, configured to receive a registration request message sent by an access network device, where the registration request message is used to request to register a tag in a core network, the registration request message includes a subscription concealed identifier of the tag, and a part of the subscription concealed identifier of the tag is plaintext information.

The transceiver module is further configured to obtain, from a first mobility management function, context information that is of the tag and that is indicated by the plaintext information.

In a possible implementation, the plaintext information includes one or more of an electronic product code of the tag, a unique identifier of the tag, a permanent identifier of the tag, an external identifier of the tag, or a temporary identifier of the tag.

In a possible implementation, the registration request message further includes second indication information.

A processing module is configured to obtain, from the first mobility management function based on the second indication information, the context information that is of the tag and that is indicated by the plaintext information.

In a possible implementation, the processing module is further configured to determine whether the first mobility management function stores the context information of the tag.

The processing module is further configured to: when the first mobility management function stores the context information of the tag, obtain the context information of the tag from the first mobility management function based on the registration request message.

In a possible implementation, the transceiver module is further configured to send the context information of the tag to the access network device.

In a possible implementation, the processing module is a processor.

In a possible implementation, the processing module is a processor, and the transceiver module is a transceiver.

According to a seventh aspect, an embodiment of this application provides a communication apparatus, including:
a transceiver module, configured to receive a query message sent by a first mobility management function, where the query message is used to query whether there is a second mobility management function that stores context information of a tag; and
a processing module, configured to determine the second mobility management function based on the query message.

The transceiver module is further configured to send identification information of the second mobility management function to the first mobility management function.

In a possible implementation, the query message includes identification information of the tag, and the identification information of the tag is used to identify the tag.

The identification information of the tag includes one or more of an electronic product code of the tag, a unique identifier of the tag, a permanent identifier of the tag, an external identifier of the tag, or a temporary identifier of the tag.

In a possible implementation, the query message further includes first indication information, and the first indication information indicates to query whether there is a mobility management function that stores the context information of the tag.

In a possible implementation, the identification information of the tag further includes a subscription concealed identifier of the tag, the subscription concealed identifier further includes plaintext information, and the plaintext information indicates the tag.

In a possible implementation, the processing module is further configured to determine permanent identification information of the tag based on the subscription concealed identifier of the tag in the query message.

The transceiver module is further configured to send the permanent identification information of the tag to the first mobility management function.

In a possible implementation, the transceiver module is further configured to send third indication information to the first mobility management function. The third indication information indicates that there is currently no second mobility management function that stores the context information of the tag.

In a possible implementation, the identification information of the second mobility management function includes address information of the second mobility management function.

In a possible implementation, the processing module is a processor.

In a possible implementation, the processing module is a processor, and the transceiver module is a transceiver.

According to an eighth aspect, an embodiment of this application provides a communication apparatus, including:
a transceiver module, configured to send a request message, where the request message indicates a tag to send a response message for the request message to an access network device; and
a processing module, configured to determine that a target tag is disconnected.

The processing module is further configured to release context information of the target tag.

In a possible implementation, the processing module is further configured to update a first value corresponding to the target tag when a response message received by the access network device does not include identification information of the target tag.

The processing module is further configured to release the context information corresponding to the target tag when the first value corresponding to the target tag reaches a first threshold.

In a possible implementation, the processing module is further configured to update a first value corresponding to the target tag when a response message sent by the target tag is not received.

The processing module is further configured to release context information corresponding to the target tag when the first value corresponding to the target tag reaches a first threshold.

In a possible implementation, the processing module is further configured to enable a timer.

The processing module is further configured to release the context information corresponding to the target tag after the timer expires and when a response message received by the access network device does not include identification information of the target tag.

In a possible implementation, the processing module is further configured to enable a timer.

The processing module is further configured to release context information corresponding to the target tag when the timer expires and when the access network device does not receive a response message sent by the target tag.

In a possible implementation, the request message includes the identification information of the target tag.

In a possible implementation, the identification information of the target tag is one or more of an electronic product code of the target tag, a temporary identifier of the target tag, a unique identifier of the target tag, a permanent identifier of the target tag, an external identifier of the target tag, or data information of the target tag.

In a possible implementation, the processing module is a processor.

In a possible implementation, the processing module is a processor, and the transceiver module is a transceiver.

According to a ninth aspect, a communication apparatus is provided, to implement the foregoing methods. The communication apparatus may be the first mobility management function, the second mobility management function, the unified data management function, and/or the access network device in the first aspect, the second aspect, the third aspect, and/or the fourth aspect, or an apparatus including the first mobility management function, the second mobility management function, the unified data management function, and/or the access network device in the first aspect, the second aspect, the third aspect, and/or the fourth aspect, or an apparatus, for example, a system chip, included in the first mobility management function, the second mobility management function, the unified data management function, and/or the access network device in the first aspect, the second aspect, the third aspect, and/or the fourth aspect. The communication apparatus provided in the fifth aspect includes a corresponding module, unit, or means (means) for implementing the foregoing methods. The module, unit, or means may be implemented by hardware or software, or may be implemented by hardware by executing corresponding software. The hardware or the software includes one or more modules or units corresponding to the foregoing functions.

According to a tenth aspect, a communication apparatus is provided, including a processor and a memory. The memory is configured to store computer instructions. When the processor executes the instructions, the communication apparatus is enabled to perform the method in any one of the foregoing aspects. The communication apparatus may be the first mobility management function, the second mobility management function, the unified data management function, or the access network device in the first aspect, the second aspect, the third aspect, or the fourth aspect, or an apparatus including the first mobility management function, the second mobility management function, the unified data management function, and/or the access network device in the first aspect, the second aspect, the third aspect, or the fourth aspect, or an apparatus, for example, a system chip, included in the first mobility management function, the second mobility management function, the unified data management function, or the access network device in the first aspect, the second aspect, the third aspect, or the fourth aspect.

According to an eleventh aspect, a communication apparatus is provided, including a processor. After reading instructions in a memory, the processor performs the method in any one of the foregoing aspects based on the instructions, and the memory is independent of the communication apparatus. The communication apparatus may be the first mobility management function, the second mobility management function, the unified data management function, or the access network device in the first aspect, the second aspect, the third aspect, or the fourth aspect, or an apparatus including the first mobility management function, the second mobility management function, the unified data management function, or the access network device in the first aspect, the second aspect, the third aspect, or the fourth aspect, or an apparatus, for example, a system chip, included in the first mobility management function, the second mobility management function, the unified data management function, or the access network device in the first aspect, the second aspect, the third aspect, or the fourth aspect.

According to a twelfth aspect, a computer-readable storage medium is provided. The computer-readable storage medium stores instructions, and when the instructions run on a communication apparatus, the communication apparatus may perform the method in any one of the foregoing aspects. The communication apparatus may be the first mobility management function, the second mobility management function, the unified data management function, or the access network device in the first aspect, the second aspect, the third aspect, or the fourth aspect, or an apparatus including the first mobility management function, the second mobility management function, the unified data management function, or the access network device in the first aspect, the second aspect, the third aspect, or the fourth aspect, or an apparatus, for example, a system chip, included in the first mobility management function, the second mobility management function, the unified data management function, or the access network device in the first aspect, the second aspect, the third aspect, or the fourth aspect.

According to a thirteenth aspect, a computer program product including instructions is provided. When the instructions run on a communication apparatus, the communication apparatus can execute the method in any one of the foregoing aspects. The communication apparatus may be the first mobility management function, the second mobility management function, the unified data management function, or the access network device in the first aspect, the second aspect, the third aspect, or the fourth aspect, or an apparatus including the first mobility management function, the second mobility management function, the unified data management function, or the access network device in the first aspect, the second aspect, the third aspect, or the fourth aspect, or an apparatus, for example, a system chip, included in the first mobility management function, the second mobility management function, the unified data management function, or the access network device in the first aspect, the second aspect, the third aspect, or the fourth aspect.

According to a fourteenth aspect, a communication apparatus (for example, the communication apparatus may be a chip or a chip system) is provided. The communication apparatus includes a processor, configured to implement a function in any one of the foregoing aspects. In a possible design, the communication apparatus further includes a memory. The memory is configured to store necessary program instructions and data. When the communication apparatus is a chip system, the communication apparatus may include a chip, or may include a chip and another discrete component.

According to a fifteenth aspect, a chip is provided. The chip includes a processor and a communication interface, the communication interface is configured to communicate with a module outside the chip, and the processor is configured to run a computer program or instructions, so that an apparatus in which the chip is installed can execute the method in any one of the foregoing aspects.

According to a sixteenth aspect, a communication system is provided, including: The first mobility management function in the first aspect and the unified data management function in the third aspect. The communication system may further include the access network device in the fourth aspect. Alternatively, the communication system includes the first mobility management function and the unified data management function in the second aspect. Alternatively, the communication system includes at least one of the communication apparatuses in the foregoing aspects.

For technical effects brought by any design manner of the fifth aspect to the sixteenth aspect, refer to technical effects brought by different design manners of the first aspect, the second aspect, the third aspect, or the fourth aspect. Details are not described herein again.

In the foregoing aspects, the first mobility management function and the second mobility management function may be mobility management functions in the cellular network, the access network device may be an access network device in the cellular network, and a tag of the unified data management function may be a unified data management function in the cellular network, or the tag may be a passive or semi-active internet of things device.

### BRIEF DESCRIPTION OF DRAWINGS

FIG. 1a is a schematic diagram of a passive or semi-active internet of things system according to an embodiment of this application;
FIG. 1b is a schematic diagram of an RFID system according to an embodiment of this application;
FIG. 1c is a schematic diagram of a network architecture of a communication system;
FIG. 2 is a schematic diagram of a hardware structure of a communication apparatus according to an embodiment of this application;
FIG. 3 is a schematic diagram of a tag inventorying procedure according to an embodiment of this application;
FIG. 4 is a schematic diagram of a tag reading/writing procedure according to an embodiment of this application;
FIG. 5 is a schematic flowchart in which a (R)AN is delegated to establish a control plane channel according to an embodiment of this application;
FIG. 6a is a schematic flowchart of an embodiment of a tag management method according to an embodiment of this application;
FIG. 6b-1 and FIG. 6b-2 are a schematic flowchart of an embodiment of a tag management method according to an embodiment of this application;

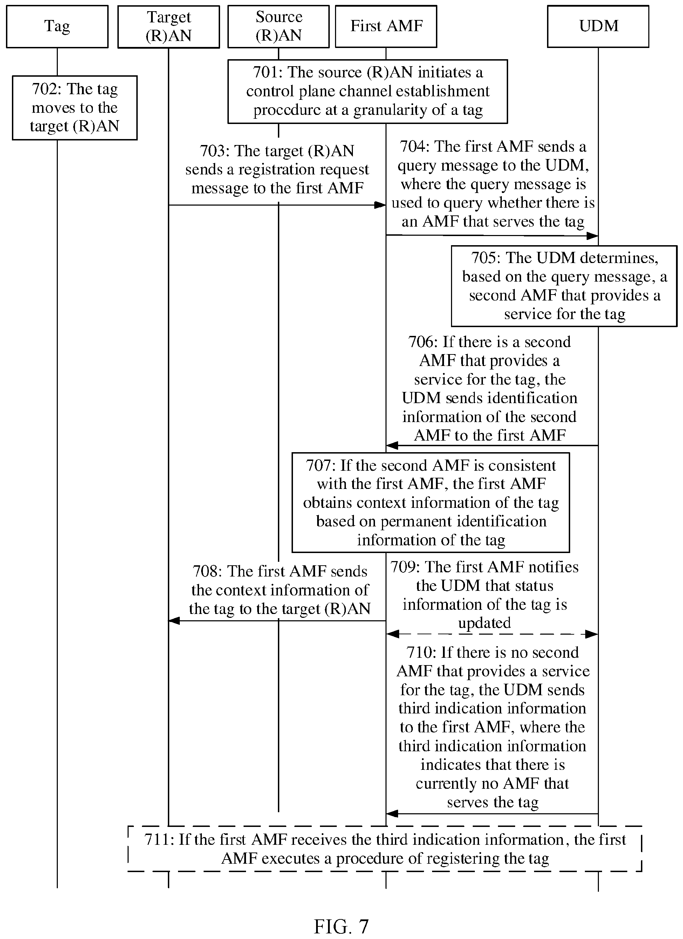

FIG. 7 is a schematic flowchart of an embodiment of a tag management method according to an embodiment of this application;

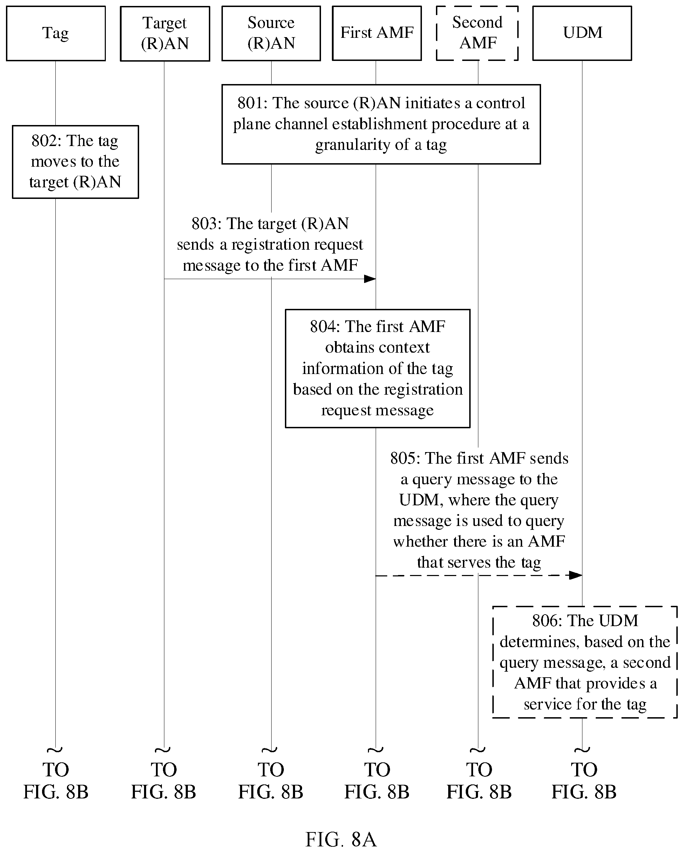

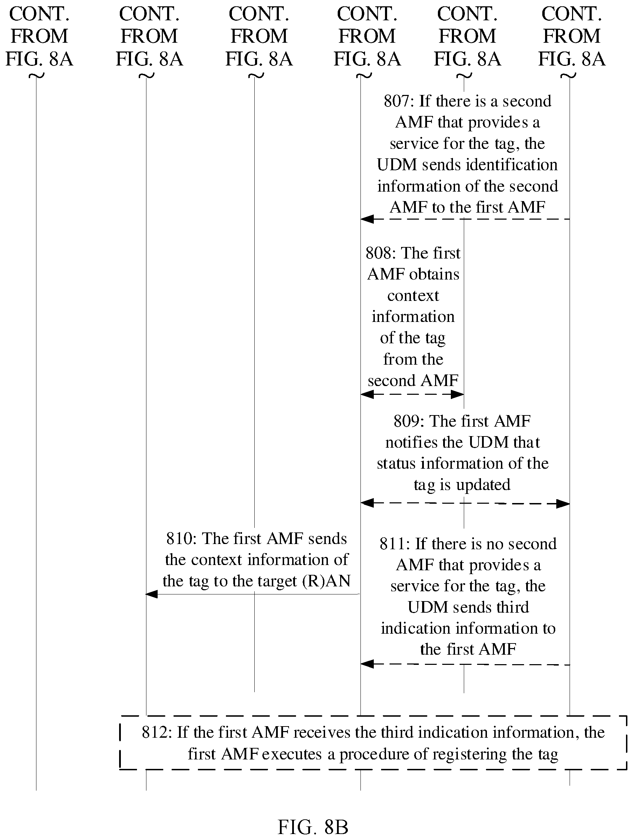

FIG. 8A and FIG. 8B are a schematic flowchart of an embodiment of a tag management method according to an embodiment of this application;

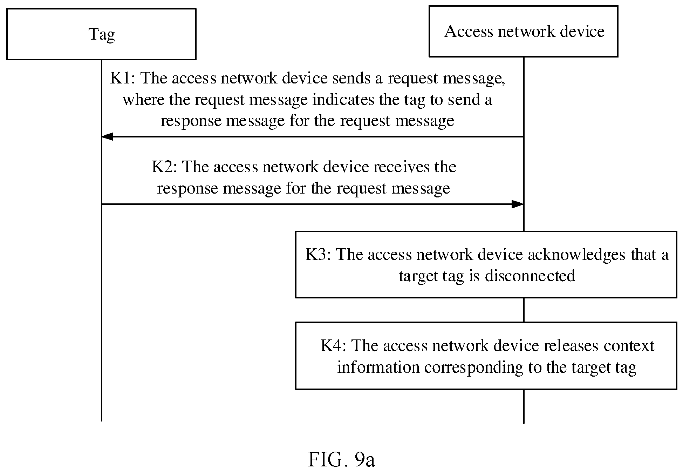

FIG. 9a is a schematic flowchart of an embodiment of a tag management method according to an embodiment of this application;

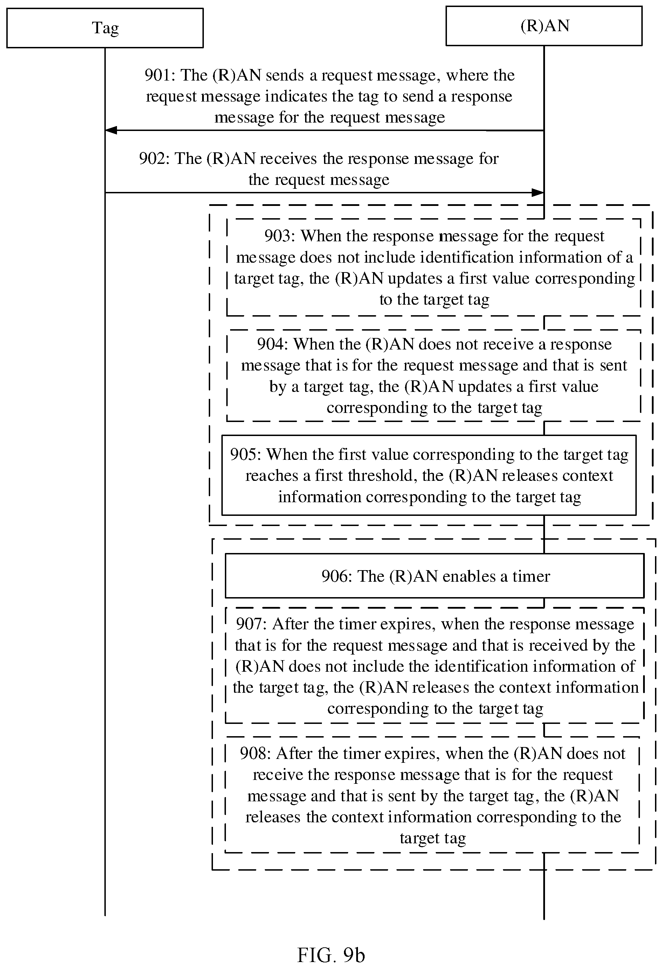

FIG. 9b is a schematic flowchart of an embodiment of a tag management method according to an embodiment of this application; and

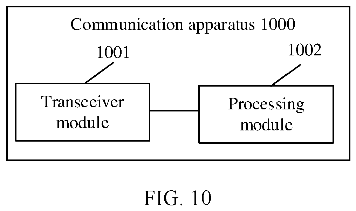

FIG. 10 is a schematic diagram of an embodiment of a communication apparatus according to an embodiment of this application.

### DESCRIPTION OF EMBODIMENTS

In the specification, claims, and the accompanying drawings of this application, the terms such as "first" and "second" and corresponding term marks are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have" and any other variants thereof mean to cover the non-exclusive inclusion, so that a process, method, system, product, or device that includes a series of units is not necessarily limited to those units, but may include other units not expressly listed or inherent to such a process, method, product, or device.

In the descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the description of this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

The technical solutions in embodiments of this application may be applied to various communication systems such as a long term evolution (Long Term Evolution, LTE) system, an LTE frequency division duplex (frequency division duplex, FDD) system, an LTE time division duplex (time division duplex, TDD) system, a 5th generation (5th generation, 5G) system or NR, and a future sixth generation communication system.

A part of various communication systems that is operated by an operator may be referred to as an operator network. The operator network may also be referred to as a public land mobile network (public land mobile network, PLMN) network, is a network established and operated by a government or an operator approved by the government to provide a land mobile communication service for the public, and is mainly a public network in which a mobile network operator (mobile network operator, MNO) provides a mobile broadband access service for a user. The operator network or the PLMN network described in embodiments of this application may be a network that meets a 3rd generation partnership project (3rd generation partnership project, 3GPP) standard requirement, and is referred to as a 3GPP network. Usually, the 3GPP network is operated by the operator, and includes but is not limited to a 5th generation mobile communication (5th generation, 5G) network (briefly referred to as a 5G network), a 4th generation mobile communication (4th generation, 4G) network (briefly referred to as a 4G network), or a 3rd generation mobile communication technology (3rd generation, 3G) network (briefly referred to as a 3G network). Further, a future 6G network is included. For ease of description, in embodiments of this application, the operator network (for example, a mobile network operator (mobile network operator, MNO) network) is used as an example for description.

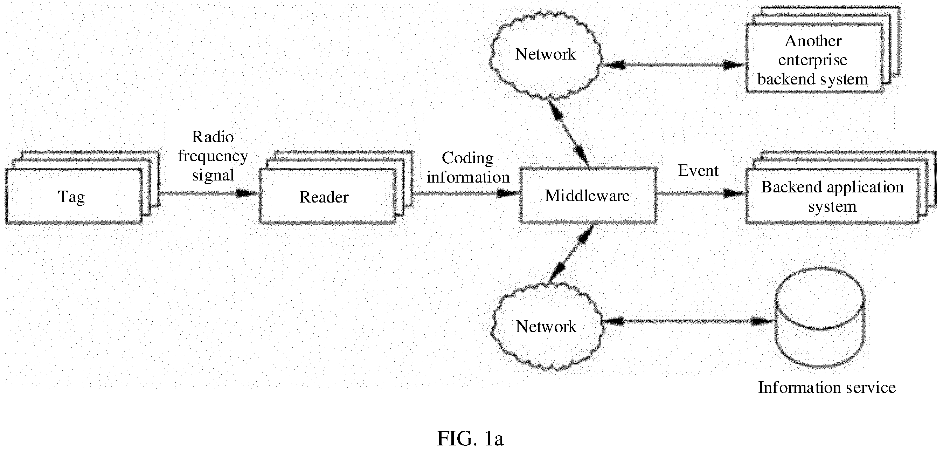

To facilitate understanding of embodiments of this application, a passive or semi-active internet of things system shown in FIG. 1a is first described. FIG. 1a is a schematic diagram of a passive or semi-active internet of things system according to an embodiment of this application. The passive or semi-active internet of things system in this embodiment of this application may be a radio frequency identification system or a radio frequency identification (Radio Frequency Identification, RFID) system. It should be noted that, the RFID system in this embodiment of this application is only an example of the passive or semi-active internet of things system in this embodiment of this application, and the passive or semi-active internet of things system in this embodiment of this application is not limited to an RFID system. With development of technologies, a name of the "passive or semi-active internet of things" may also change. The "passive or semi-active internet of things" in this embodiment of this application may alternatively be a system (or a communication technology) that has a structure or function of the "passive or semi-active internet of things" in a future communication system.

RFID is a type of automatic identification technology. A reader (Reader) performs contactless bidirectional data communication in a wireless radio frequency manner, and reads or writes a tag (Tag) in the wireless radio frequency manner, to identify a target and exchange data. The RFID system has two working manners: One is that when an RFID tag enters a valid identification range of the reader, the RFID tag receives a radio frequency signal sent by the reader, and sends, based on energy obtained based on an induced current, information (corresponding to a passive tag) stored in a chip. Another type is that the RFID tag actively sends a signal (corresponding to an active tag) at a frequency. After receiving information, the reader decodes the information by using middleware and an encoder. An information service system, a backend application system, or another enterprise backend system processes data obtained through decoding. The technology is widely applied to various industries. The following briefly describes two application scenarios.

### (1) Logistics application scenario

An RFID tag is embedded in a commodity. In a logistics process of the commodity, information related to the commodity is automatically collected by the reader. A management personnel may quickly query information about the commodity in a system, to reduce a risk that the commodity is discarded or stolen, improve a commodity delivery speed, improve accuracy, and prevent counterfeiting and smuggling.

### (2) Fixed asset management

In places such as a library, an art gallery, and a museum in which valuable objects are stored, an RFID tag is disposed on the valuable objects. The monitor may monitor the RFID tag, to learn, in a first time, of whether information about a storage location of the valuable objects changes abnormally.

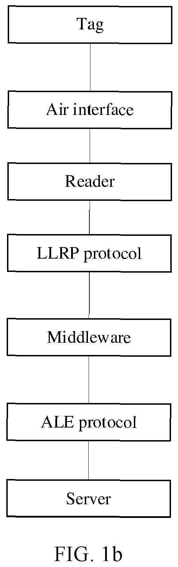

An electronic product code (Electronic Product Code, EPC) standard organization defines an RFID system architecture. Specifically, FIG. 1b is a schematic diagram of an RFID system according to an embodiment of this application. The RFID system includes a tag, a reader, middleware, and a server. The reader may inventory tags. The middleware may collect tag information found through inventorying from one or more readers, filter and de-duplicate the tag information, to generate a server-readable inventorying report, and send the report to the server. The tag and the reader (RFID Reader) communicate based on an air interface protocol (for example, a 2nd generation air interface Gen 2 air interface protocol). The reader and the middleware communicate based on a low level reader protocol (Low Level Reader Protocol, LLRP). The middleware and the server communicate based on an application level event (Application Level Event, ALE) protocol.

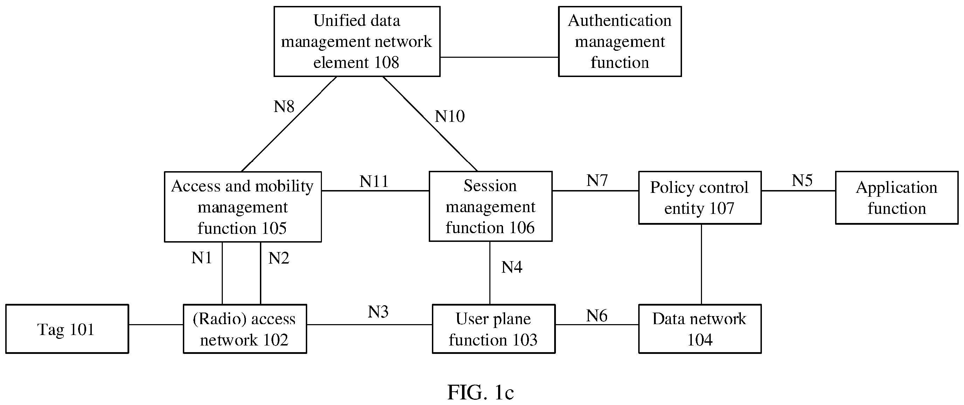

The following describes a communication network architecture that embodiments of this application are based on, as shown in FIG. 1c. As shown in FIG. 1c, a network architecture may include a tag, an operator network part, and a part of a data network 104 (data network, DN).

A tag part includes a tag 101. As a passive or semi-active internet of things device, the tag 101 in embodiments of this application may communicate with one or more core network (core network, CN) through an access network device in a (radio) access network 102 ((radio) access network, (R)AN) that has a reader function. Tags in embodiments of this application include but are not limited to an electronic price tag of a supermarket, a mother and child bracelet in a medical treatment, an asset tag of a smart park, or a radio frequency card. A communication network may include unified data management 108 (unified data management, UDM), an access and mobility management function 105 (access and mobility management function, AMF), a session management function 106 (session management function, SMF), a policy control network element 107 (Policy Control Function, PCF), a user plane function 103 (user plane function, UPF), a (R)AN 102, and the like. In the communication network, a part other than the (R)AN part may be referred to as a core network (core network, CN) part or a core network part.

The data network DN 104 may also be referred to as a protocol data network (protocol data network, PDN), may be a data network of an operator or an enterprise, or may be a third-party data network. The communication network may access a plurality of data networks DNs 104, and a plurality of services may be deployed on the data network DN 104, to provide services such as data and/or voice for the tag. For example, the data network DN 104 may be a private network of an intelligent factory. A sensor installed in a workshop of the intelligent factory may be a tag. A controller server of the sensor is deployed in the data network DN 104, and the controller server may provide a service for the sensor. The sensor may communicate with the controller server, obtain an instruction of the controller server, and transmit collected sensor data to the controller server based on the instruction. For another example, the data network DN 104 may be an internal office network of a company, a mobile phone or a computer of an employee of the company may be a tag, and the mobile phone or the computer of the employee may access information, a data resource, and the like on the internal office network of the company.

The tag may be connected to the communication network through an interface (for example, N1) provided by the communication network, and use services such as data and/or voice provided by the communication network. The tag may further access the data network DN 104 through the communication network, and use an operator service deployed on the data network DN 104 and/or a service provided by a third party. The third party may be a communication network and a service other than the tag, and may provide other services such as data and/or voice for the tag. A specific representation form of the third party may be specifically determined based on an actual application scenario. This is not limited herein.

The following briefly describes network functions in the communication network.

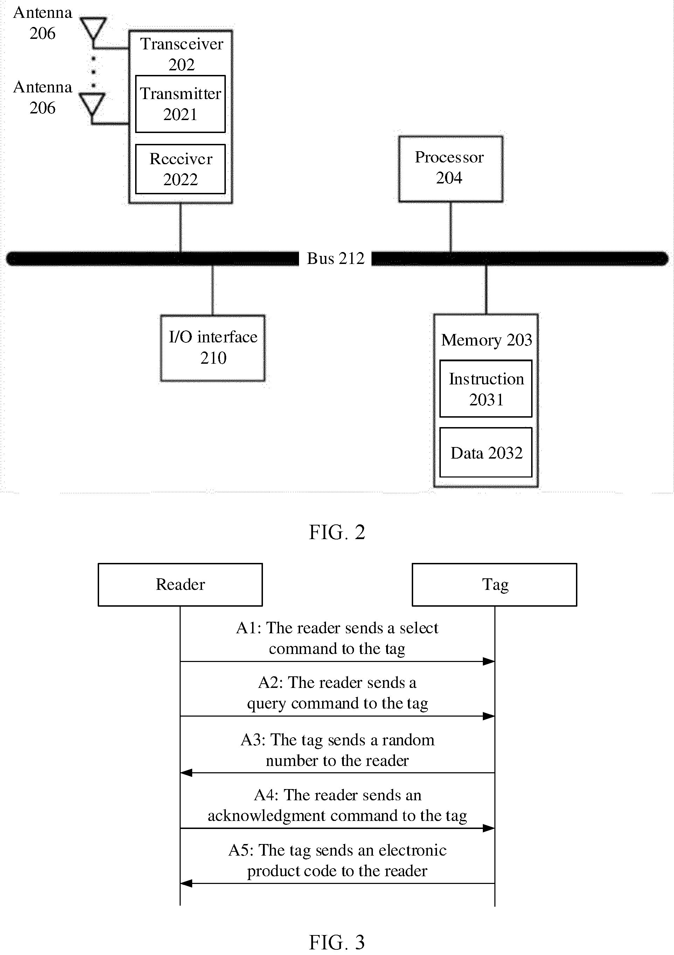

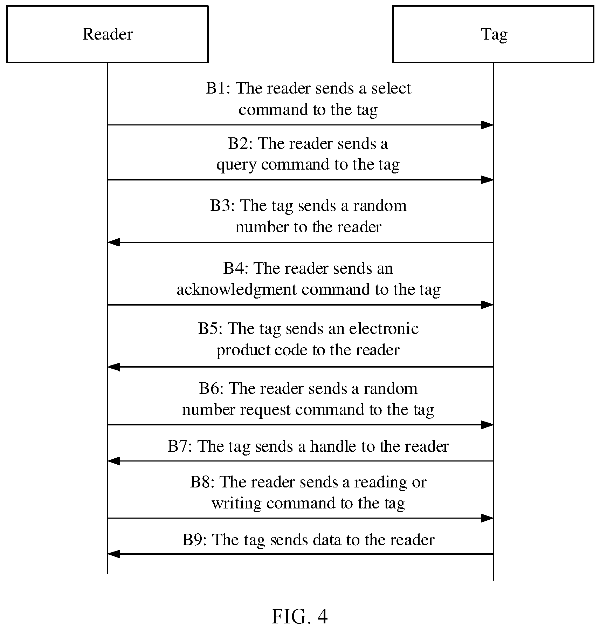

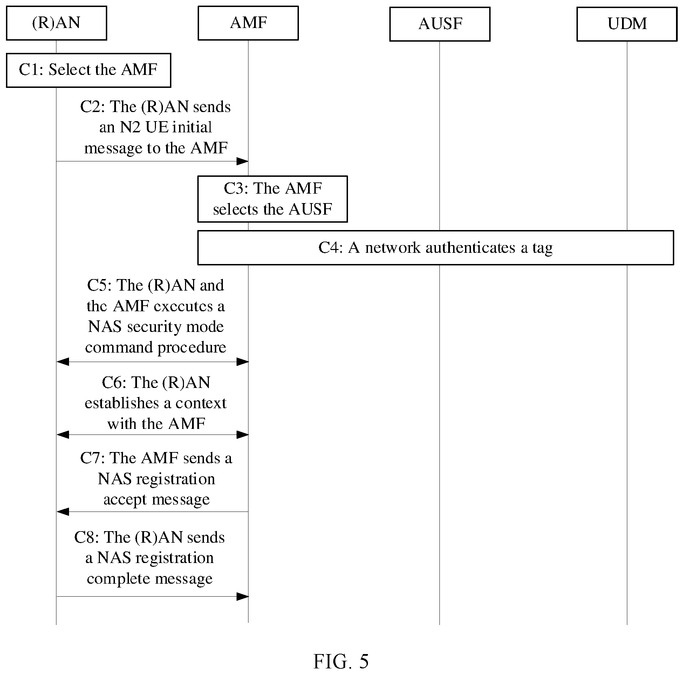

The (R)AN 102 is a device that provides a wireless communication function for the tag. The tag passes through the (R)AN 102, and may be connected to a service node of the communication network through the (R)AN 102, to access the communication network. For the access network device 102 (a (R)AN device) in embodiments of this application, the (R)AN device includes but is not limited to a next-generation node base station (next-generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home evolved NodeB (for example, home evolved NodeB, or home NodeB, HNB), a baseband unit (base band unit, BBU), a transmitting and receiving point (transmitting and receiving point, TRP), a transmitting point (transmitting point, TP), a small cell device (pico), a mobile switching center, an access point in a non-3GPP (for example, Wireless Local Area Network, WLAN, or Bluetooth Bluetooth) network, a network device in a future network, or the like. In a system in which different radio access technologies are used, names of devices that have a function of the access network device may be different. For ease of description, in all embodiments of this application, the apparatus that provides a wireless communication function for the tag is collectively referred to as an access network device or is briefly referred to as a (R)AN 102 or an AN 102 for short. It should be understood that, a specific type of the access network device is not limited in this specification. The access network device combines some or all functions of the reader in the passive or semi-active internet of things. For a communication procedure between the access network device and the tag, for example, a tag inventorying procedure and a tag reading/writing procedure, refer to descriptions in FIG. 3 and FIG. 4. It should be noted that, in embodiments of this application, the (R)AN further has a function of the tag, in other words, requests to establish a control plane channel with the core network. In other words, the (R)AN is delegated to establish the control plane channel for the tag. For details, refer to descriptions in FIG. 5 in this application.

The access and mobility management function AMF 105 (which may also be referred to as an AMF network element, an AMF network function, or an AMF network functional entity) is a control plane network function provided by the communication network, and is responsible for access control and mobility management performed when the tag accesses the communication network, for example, includes functions such as mobility status management, temporary user identifier assignment, and user authentication and authorization.

The session management function SMF 106 (which may also be referred to as an SMF network element, an SMF network function, or an SMF network functional entity) is a control plane network function provided by the communication network, and is responsible for managing a protocol data unit (protocol data unit, PDU) session of the tag. The PDU session is a channel for transmitting a PDU. The tag needs to communicate the PDU with the data network DN 104 through the PDU session. A network function of the SMF 106 is responsible for establishing, maintaining, and deleting the PDU session. The network function of the SMF 106 includes session related functions such as session management (for example, session establishment, modification, and releasing, including maintenance of a tunnel between the user plane function UPF 103 and the (R)AN 102), selection and control of a network function of the UPF 103, service and session continuity (service and session continuity, SSC) mode selection, and roaming.

The user plane function UPF 103 (which may also be referred to as a UPF network element, a UPF network function, or a UPF network functional entity) is a gateway provided by an operator, and is a gateway through which the communication network and the data network DN 104 communicate. The network function of the UPF 103 includes user plane related functions such as data packet routing and transmission, data packet detection, service usage reporting, quality of service (quality of service, QoS) processing, lawful interception, uplink data packet detection, and downlink data packet storage.

The unified data management network element UDM 108 (which may also be referred to as a UDM network element, a UDM network function, or a UDM network functional entity) is a control plane function provided by the operator, and is responsible for storing information such as a subscription permanent identifier (subscription permanent identifier, SUPI) of a subscriber of the communication network, a generic public subscription identifier (generic public subscription identifier, GPSI) of the subscriber, and a credential (credential). In a transmission process, the SUPI is first encrypted, and an encrypted SUPI is referred to as a subscription concealed identifier (subscription concealed identifier, SUCI). The information stored in the UDM 108 may be used for authentication and authorization performed when the tag accesses the communication network. The subscriber of the communication network may be specifically a user who uses a service provided by the communication network, for example, a user who uses a mobile phone chip card of an operator A. The credential of the subscriber may be a stored small file such as a long-term key stored in the mobile phone chip card or information related to encryption of the mobile phone chip card, and is used for authentication and/or authorization. It should be noted that information such as the permanent identifier, the credential, a secure context, authentication data (cookie), and a token that are related to verification/authentication and authorization is not distinguished or limited for case of description in embodiments of this application.

A policy control entity (policy control function, PCF) is responsible for policy control, charging policy control, quality of service (quality of service, QoS) control, and the like. The PCF 107 may interact with an AF, to obtain a quality of service (Quality of Service, QoS) parameter or provide a QoS parameter for the AF, so that application data transmission can be affected.

For the application function AF, the AF interacts with a 3rd generation partnership project (3rd Generation Partnership Project, 3GPP) core network, to provide an application layer service. The application function AF may be located in a data network (data network, DN). For example, the AF provides an application layer data route, and provides an access network capability. The AF may interact with the PCF 107. A location of the AF may be inside a 5G core network or outside a 5G core network. If the AF is inside the 5G core network, the AF may directly interact with the PCF 107. If the AF is outside the 5G core network, a network exposure function (Network Exposure Function, NEF) serves as an intermediate node, to forward content exchanged between the AF and the PCF 107. For example, forwarding is performed through the NEF.

An authentication management function (authentication server function, AUSF) (which may also be referred to as an AUSF network element, an AUSF network function, or an AUSF network functional entity) is a control plane function provided by the operator, and is usually configured to perform primary authentication, that is, authentication between the tag 101 (the subscriber) and the communication network. After receiving an authentication request initiated by the subscriber, the AUSF may authenticate and/or authorize the subscriber based on authentication information and/or authorization information stored in the UDM 108, or generate authentication and/or authorization information of the subscriber through the UDM 108. The AUSF may feed back the authentication information and/or authorization information to the subscriber. In an implementation, the AUSF may alternatively be co-deployed with the UDM.

In actual deployment, network elements in the core network may be co-deployed. For example, the access and mobility management function may be co-deployed with the session management function. The session management function may be co-deployed with the user plane function. When two network elements are co-deployed, interaction between the two network elements provided in embodiments of this application becomes an internal operation of the co-deployed network elements or may be omitted.

For ease of description, in embodiments of this application, that the access and mobility management network function is the AMF 105 is used as an example for description. The access and mobility management network function may alternatively be another network function that has the AMF network function in a future communication system. Alternatively, the access and mobility management network function 105 in this application may be a mobility management network element (Mobility Management Entity, MME), or the like in LTE. Further, the AMF network function is briefly referred to as an AMF for short, and the tag is referred to as UE. In this application, all AMFs described below in embodiments of this application may be replaced with an access and mobility management network function, and all UEs may be replaced with tags.

The user plane function UPF 103 in embodiments of this application may alternatively be another network function that has the UPF network function in the future communication system. This is not limited herein.

A tag management method provided in this application may be applied to various communication systems. For example, the communication system may be an internet of things (internet of things, IoT), a narrow band internet of things (narrow band internet of things, NB-IoT), or long term evolution (long term evolution, LTE), or may be a 5th generation (5G) communication system, or may be a hybrid architecture of LTE and 5G, or may be a 5G new radio (new radio, NR) system, or a new communication system that emerges during development of the future communication. The 5G communication system in this application may include at least one of a non-standalone (non-standalone, NSA) 5G communication system or a standalone (standalone, SA) 5G communication system. The communication system may alternatively be a public land mobile network (public land mobile network, PLMN) network, a device-to-device (device-to-device, D2D) network, a machine to machine (machine to machine, M2M) network, or another network.

"Packet" in embodiments of this application may also be replaced with "data packet", "data", "instruction", "signaling", or the like. This is not limited herein.

In addition, embodiments of this application may be further applied to another future-oriented communication technology, for example, 6G.

FIG. 2 is a schematic diagram of a hardware structure of a communication apparatus according to an embodiment of this application. The communication apparatus may be a possible implementation of a first AMF, a UDM, and/or an access network device in embodiments of this application. As shown in FIG. 2, the communication apparatus includes at least a processor 204, a memory 203, a transceiver 202, an I/O (input/output, Input/Output) interface 210, and a bus 212. The memory 203 is further configured to store instructions 2031 and data 2032. When the communication apparatus is an access network device, the communication apparatus may further include an antenna 206. The transceiver 202 further includes a transmitter 2021 and a receiver 2022. In addition, the processor 204, the transceiver 202, the memory 203, and the I/O interface 210 are communicatively connected with each other through the bus 212, and the antenna 206 is connected to the transceiver 202.

The processor 204 may be a general-purpose processor, for example, including but not limited to a central processing unit (Central Processing Unit, CPU); or may be a dedicated processor, for example, including but not limited to a digital signal processor (Digital Signal Processor, DSP), an application-specific integrated circuit (Application-specific Integrated Circuit, ASIC), or a field programmable gate array (Field Programmable Gate Array, FPGA). The processor 204 may alternatively be a neural processing unit (neural processing unit, NPU). In addition, the processor 204 may alternatively be a combination of a plurality of processors. Specifically, in the technical solutions provided in embodiments of this application, the processor 204 may be configured to perform related steps of the tag management method in subsequent method embodiments. The processor 204 may be a processor specially designed to perform the foregoing steps and/or operations, or may be a processor that performs the foregoing steps and/or operations by reading and executing the instructions 2031 stored in the memory 203. The processor 204 may need to use the data 2032 in a process of performing the foregoing steps and/or operations.

The transceiver 202 includes a transmitter 2021 and a receiver 2022. In an optional implementation, the transmitter 2021 is configured to send a signal through the antenna 206. The receiver 2022 is configured to receive a signal through at least one antenna in the antennas 206. Specifically, in the technical solutions provided in embodiments of this application, the transmitter 2021 may be specifically configured to perform, through at least one antenna in the antennas 206, for example, an operation performed by a receiving module or a sending module in the first AMF, the UDM, and/or the access network device when the tag management method in the subsequent method embodiments is applied to the first AMF, the UDM, and/or the access network device.

In embodiments of this application, the transceiver 202 is configured to support the communication apparatus to execute the receiving function and the sending function. A processor having a processing function is considered as the processor 204. The receiver 2022 may also be referred to as an input port, a receive circuit, or the like. The transmitter 2021 may be referred to as a transmitter, a transmit circuit, or the like.

The processor 204 may be configured to execute the instructions stored in the memory 203, to control the transceiver 202 to receive a message and/or send a message, so as to complete a function of the communication apparatus in the method embodiments of this application. In an implementation, a function of the transceiver 202 may be considered to be implemented by using a transceiver circuit or a chip dedicated to receiving or sending. In embodiments of this application, that the transceiver 202 receives a message may be understood as that the transceiver 202 inputs the message, and that the transceiver 202 sends a message may be understood as that the transceiver 202 outputs the message.

The memory 203 may be of various types of storage media such as a random access memory (Random Access Memory, RAM), a read-only memory (Read-only Memory, ROM), a nonvolatile RAM (Nonvolatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 203 is specifically configured to store the instructions 2031 and the data 2032. The processor 204 may read and execute the instructions 2031 stored in the memory 203, to perform the steps and/or the operations described in the method embodiments of this application, and may need to use the data 2032 in a process of performing the operations and/or the steps in the method embodiments of this application.

Before embodiments of this application are described, technical content in embodiments of this application is first described.

### (1) Tag inventorying procedure

The tag inventorying procedure is used to inventory existing tags. Each tag has identification information of the tag. In a possible implementation, the identification information may be an electronic product code (Electronic Product Code, EPC). The following provides descriptions by using an example in which the identification information is an EPC code. However, in embodiments of this application, the identification information of the tag is not limited to the EPC code. In the inventorying procedure, the tag sends the EPC code to a reader, so that the reader can learn of a specific tag that falls within a coverage area of the reader. The information is finally reported by the reader to middleware and a server. FIG. 3 is a schematic diagram of a tag inventorying procedure according to an embodiment of this application.

A1: The reader sends a select command to the tag.

In step A1, the reader receives an inventorying command. After receiving the inventorying command, the reader generates the select (select) command. The command includes a tag range, for example, an EPC code in a specific range.

After detecting the select command, the tag determines whether the tag falls within the tag range in the select command. If the tag falls within the tag range in the select command, the tag feeds back information after detecting a query (Query) command in a subsequent procedure; or if the tag does not fall within the tag range in the select command, the tag does not perform an action in a subsequent procedure.

A2: The reader sends the query command to the tag.

In step A2, the reader continues to send the query command.

A3: The tag sends a random number to the reader.

In step A3, when the tag determines that the tag falls within the tag range in the select command, the tag sends the random number, for example, an RN 16, to the reader in a contention manner.

A4: The reader sends an acknowledgment command to the tag.

In step A4, after the reader receives the random number from the tag, the reader sends the acknowledgment (ACK) command. The acknowledgment command includes the random number (the RN 16) received in step A3.

A5: The tag sends the EPC code to the reader.

In step A5, after receiving the acknowledgment command sent by the reader, the tag checks the random number in the acknowledgment command. After the check succeeds, the tag feeds back the EPC code of the tag to the reader, to complete the inventorying procedure.

### (2) Tag reading/writing procedure

In the tag reading/writing procedure, a writing or reading operation is performed on a tag. If the writing operation is performed, data is written into a storage area of the tag; or if the reading operation is performed, data in the storage area of the tag is read. In the reading/writing procedure, a reader sets a tag range in a select (Select) command to a tag range that needs to be read/written (for example, if the range in the select command is an EPC code, a reading/writing operation is performed on a tag corresponding to the EPC code). FIG. 4 is a schematic diagram of a tag reading/writing procedure according to an embodiment of this application.

B1: The reader sends the select command to the tag.

B2: The reader sends a query command to the tag.

B3: The tag sends a random number to the reader.

B4: The reader sends an acknowledgment command to the tag.

B5: The tag sends the EPC code to the reader.

Steps B1 to B5 are consistent with steps A1 to A5. Details are not described herein again.

B6: The reader sends a random number request (Req_RN) command to the tag.

In step B6, the reader sends the Req_RN command to the tag. The Req_RN command includes the random number, namely, an RN 16, received in step B3.

B7: The tag sends a handle to the reader.

In step B7, after the tag determines, through a check, that the random number received in step B6 is correct, the tag sends the handle to the reader. In a subsequent reading/writing procedure, the handle (handle) needs to be included.

B8: The reader sends a reading or writing command to the tag.

In step B8, the reader sends the reading command or the writing command to the tag. The reading command or the writing command needs to include the handle. The writing command further needs to include data written into the storage area of the tag.

B9: The tag sends data to the reader.

Step B9 is performed if the reading command is sent in step B8.

In step B9, the tag sends the data in the storage area of the tag to the reader, and the handle is included.

### (3) State management of user equipment (UE) in a moving state

A registration management status of the UE includes a registered state (RM-REGISTERED) and a deregistered state (RM-DEREGISTERED). A connection management status of the UE includes a connected state (CM-CONNECTED) and an idle state (CM-IDLE).

When the UE is in the CM-CONNECTED state (connected state), there is connectivity between a network side and the UE. The network side periodically enables the UE to report a signal measurement report between the UE and a network device near the UE. When the UE moves (that is, moves from one (R)AN to another (R)AN), the network side perceives that a current connection signal between the UE and the another (R)AN is better, so that the UE performs a handover procedure, to be handed over from an original (R)AN to a target (R)AN. In other words, when the UE is in the connected state, the network side may perceive mobility of the UE.

When the UE is in the idle state, because the UE releases an AN connection, the network side cannot learn of a location of the UE in a manner used when the UE is in the connected state. However, the UE may monitor, by using a broadcast signal, a tracking area (Tracking Area, TA) in an area in which the UE is located. If the UE finds that the TA in the area in which the UE is located is not in a TA list maintained by the UE, the UE is triggered to initiate a mobility registration update procedure, that is, notify the network side that the UE is not in an original TA list. In this process, an identifier carried by the UE is a 5G-globally unique temporary UE identity (Globally Unique Temporary UE Identity, GUTI), and the 5G-GUTI is a temporary identifier of the UE. The network side may learn, based on the 5G-GUTI, of an AMF that serves the UE when the UE is originally registered, so that context information of the UE may be obtained.

### (4) A (R)AN is delegated to establish a control plane channel.

The (R)AN needs to be delegated to establish a control plane (or user plane) channel at a granularity of a (R)AN or at a granularity of a tag, to implement transmission of a passive or semi-active internet of things instruction. In embodiments of this application, "delegated to establish" may also be briefly referred to as "delegated to establish". The control plane (or user plane) channel at a granularity of a (R)AN means that each (R)AN establishes a control plane (or user plane) channel. In this case, each (R)AN has a corresponding terminal identifier (which may also be referred to as an SUPI that the (R)AN is delegated to establish for the tag). The (R)AN supports a function of the terminal, and a control plane (or user plane) channel of the terminal is established between the terminal identifier and a core network. A control plane (or user plane) channel of the terminal is used to transmit control signaling or user plane data of all tags in a coverage area of the (R)AN. The control plane (or user plane) channel at a granularity of a tag means that the (R)AN is delegated to establish a control plane (or user plane) channel for each tag. For example, the (R)AN establishes the terminal identifier (which may also be referred to as an SUPI that the (R)AN is delegated to establish for the tag) based on an identifier corresponding to the tag, and establishes the control plane (or user plane) channel for the tag based on the constructed terminal identifier. The control plane (or user plane) channel is a channel between the (R)AN and the core network, and is used to transmit control plane signaling or user plane data of the corresponding tag. That the (R)AN is delegated to establish a control plane channel for the tag is used as an example. "Delegated to establish" means that the (R)AN establishes non-access stratum (Non-access stratum, NAS) signaling for the tag, and completes a control plane channel establishment procedure based on the signaling. For a specific process of "being delegated to establish" the control plane channel, refer to FIG. 5. FIG. 5 is a schematic flowchart in which a (R)AN is delegated to establish a control plane channel according to an embodiment of this application.

C1: The (R)AN selects an AMF.

In step C1, the (R)AN selects a proper AMF.

C2: The (R)AN sends an N2 UE initial message to the AMF.

In step C2, the (R)AN sends the N2 UE initial message (N2 UE initial message) to the AMF. The (R)AN supports a non-access stratum (Non-access stratum, NAS) protocol stack. The (R)AN is delegated to establish NAS signaling for the tag (tag). A specific procedure in which the (R)AN is delegated to establish NAS signaling for the tag is similar to a procedure in which a wireline access gateway function (wireline access gateway function, W-AGF) is delegated to establish NAS signaling for a fixed network residential gateway (fixed network residential gateway, FN-RG). For the specific procedure in which the W-AGF is delegated to establish NAS signaling for the FN-RG, refer to Section 7.2.1.3 of 3GPP protocol TS 23.316.

The N2 UE initial message includes non-access stratum (Non-access stratum, NAS) signaling, the NAS signaling is a registration request message, and the registration request message includes a subscription concealed identifier (subscription Concealed Identifier, SUCI).

C3: The AMF selects an AUSF.

In step C3, the AMF selects a proper AUSF.

C4: A network authenticates the tag.

In step C4, the network executes an authentication procedure on the tag. A UDM matches the SUCI and a corresponding subscription permanent identifier (subscription permanent identifier, SUPI), and sends the SUCI to the AMF by using the AUSF, so that the AMF learns of the SUPI corresponding to the SUCI.

C5: The (R)AN and the AMF executes a NAS security mode command procedure.

In step C5, after authentication succeeds, the AMF initializes the NAS security mode command procedure (NAS Security Mode Command procedure). The (R)AN returns a NAS security mode complete message (NAS Security Mode Complete message) to the AMF through an N2 uplink NAS message, to make a response. In this case, the (R)AN substitutes the tag to establish a NAS security context (NAS security context) between the (R)AN and the AMF.

C6: The (R)AN establishes a context with the AMF.

In step C6, after receiving the NAS security mode complete message of the (R)AN, the AMF sends an initial context request (N2 Initial Ctx Request) to the (R)AN. After completing context establishment, the (R)AN sends a response message (N2 Initial Ctx Response) to the AMF. In this case, the (R)AN establishes a context instead of the tag.

C7: The AMF sends a NAS registration accept message.

C8: The (R)AN sends a NAS registration complete message.

Steps C7 and C8 means that the procedure in which the (R)AN is delegated to establish the control plane channel for the tag is completed, and the tag is successfully registered in a core network.

The following describes embodiments of this application with reference to the accompanying drawings.

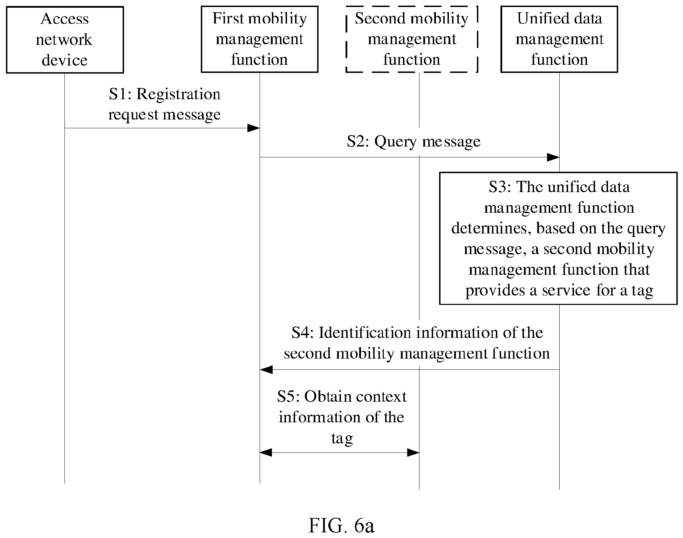

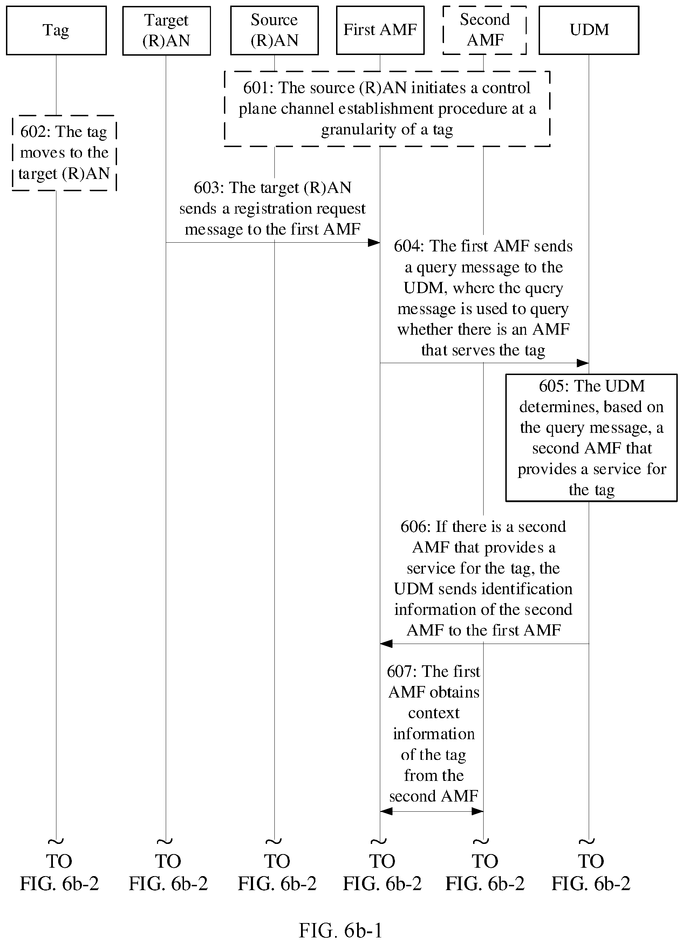

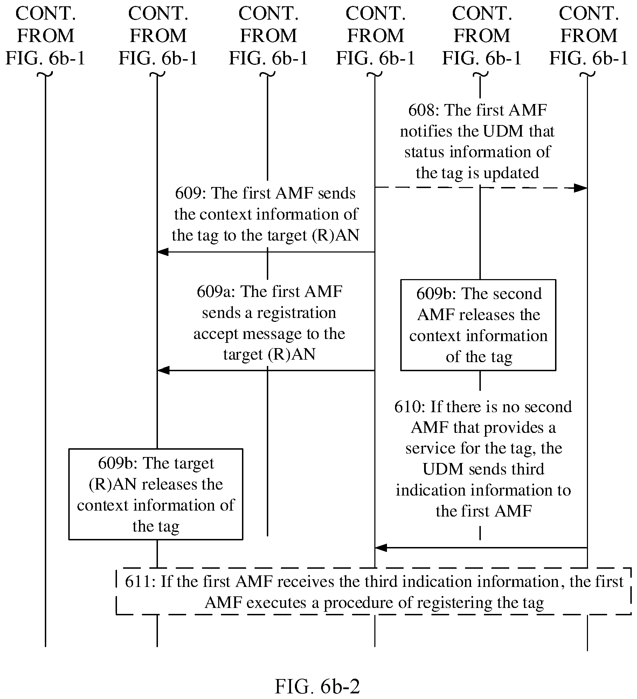

FIG. 6a is a schematic flowchart of an embodiment of a tag management method according to an embodiment of this application. The tag management method provided in this embodiment of this application includes the following steps.

S1: An access network device sends a registration request message to a first mobility management function, where the registration request message is used to request to register a tag in a core network.

Further, the registration request message may be non-access stratum signaling based on a non-access stratum (Non-Access Stratum, NAS) protocol stack, and an existing case in which the registration request message is sent by using non-access stratum signaling on a network side is still used, to reduce a change to the network side, and effectively ensure information security. The registration request message may alternatively be next-generation application protocol signaling based on a next-generation application protocol (Next-generation Application Protocol, NGAP) protocol stack. This is not limited herein.

The registration request message includes identification information of the tag, and the identification information of the tag is used to identify the tag, or indicates identity information of the tag. The identification information of the tag includes but is not limited to one or more of an electronic product code of the tag, a unique identifier of the tag, a permanent identifier of the tag, an external identifier of the tag, or a temporary identifier of the tag. The following separately provides descriptions:

The electronic product code of the tag may be an electronic product code (Electronic Product Code, EPC), for example, "urn:epc:id:sgtin:CompanyPrefix.ItemRefAndIndicator.SerialNumber". Herein, "sgtin" indicates that an item or an object identified by the EPC code is a commodity; "CompanyPrefix" is used to identify a management entity or a representative, and may be understood as being used to identify an enterprise (or a manufacturer); "ItemRefAndIndicator" may also be referred to as "Item Reference", and is used to identify a specific object type, for example, clothes, articles of daily use, or food; and "SerialNumber", that is, a serial number, is used to identify the item or the object. The electronic product code of the tag may alternatively be a variant of the EPC code. This is not limited herein.

The unique identifier of the tag may be a media access control address (Media Access Control Address, MAC) of the tag.

The permanent identifier of the tag may be information such as a subscription permanent identifier (subscription permanent identifier, SUPI) of the tag, or a credential (credential) of the tag.

The external identifier of the tag may be another identifier allocated by the access network device or another external device (for example, a server) to the tag, for example, a generic public subscription identifier (generic public subscription identifier, GPSI) of the tag.

The temporary identifier of the tag may be a temporarily used identifier allocated by the access network device or another external device (for example, the server) to the tag.

The identification information of the tag may alternatively be a subscription concealed identifier (subscription concealed identifier, SUCI). The SUCI is identification information generated after the SUPI is encrypted.

The identification information of the tag may alternatively be a variant of the foregoing identifiers. This is not limited herein.

Optionally, the identification information of the tag is the subscription concealed identifier of the tag, and a part of the subscription concealed identifier of the tag is plaintext information.

The plaintext information includes one or more of an electronic product code of the tag, a unique identifier of the tag, a permanent identifier of the tag, an external identifier of the tag, or a temporary identifier of the tag.

In a possible implementation, the registration request message may include the SUCI of the tag (the SUCI of the tag is the identification information of the tag) and first indication information. The first indication information indicates that a registration status of the tag needs to be queried, or the first indication information indicates that whether there is a mobility management function that serves the tag needs to be queried. In a possible implementation, the first indication information is registration check indication (registration check indication, RCI) information.

Identification information that is of the tag and that can be used in a cellular network includes one or more of the following: a unique identifier of the tag, a permanent identifier of the tag, an external identifier of the tag, a temporary identifier of the tag, or an SUCI of the tag.

S2: The first mobility management function sends a query message to a unified data management function, where the query message is used to query whether there is a mobility management function that serves the tag.

Further, the first mobility management function sends the query message to the unified data management function, where the query message is used to query whether there is a mobility management function that serves the tag. The query message includes but is not limited to the identification information of the tag. The identification information of the tag includes one or more of a subscription concealed identifier SUCI of the tag, an electronic product code of the tag, a unique identifier of the tag, a permanent identifier of the tag, an external identifier of the tag, or a temporary identifier of the tag. For descriptions of the identification information of the tag, refer to step S1. Details are not described herein again.

S3: The unified data management function determines, based on the query message, a second mobility management function that provides a service for the tag.

Further, the unified data management function queries, based on the query message, whether there is a mobility management function that serves the tag. In this embodiment of this application, for ease of description, the mobility management function that serves the tag is referred to as the second mobility management function. The query message includes the identification information of the tag.

In a possible implementation, when the query message includes the SUCI of the tag, the unified data management function first maps the SUCI to the corresponding SUPI. The unified data management function stores the SUPI and related context information of the SUPI, and the context information includes but is not limited to the registration status of the tag and related information about a network function (or referred to as a network element) that serves the SUPI (or the tag corresponding to the SUPI). The related information includes identification information of the network element and/or address information of the network element.

For example, the unified data management function queries a registration status of the SUPI. If the SUPI is registered, the unified data management function queries which mobility management function is the mobility management function that serves the SUPI, and feeds back identification information of the mobility management function to the mobility management function (the first mobility management function) that makes a query. The identification information of the mobility management function may be address information of the mobility management function, for example, an internet protocol address (Internet Protocol address, IP address) of the mobility management function.

S4: If there is a second mobility management function that provides a service for the tag, the unified data management function sends identification information of the second mobility management function to the first mobility management function.

The identification information of the second mobility management function includes but is not limited to an IP address of the second mobility management function, a MAC address of the second mobility management function, and the like.

In a possible implementation, the unified data management function further sends permanent identification information of the tag to the first mobility management function. The permanent identification information of the tag includes but is not limited to an EPC code of the tag, an SUPI of the tag, or a MAC address of the tag.

For example, in step S2, the first mobility management function sends the SUCI to the unified data management function, the unified data management function obtains the SUPI corresponding to the SUCI, and the unified data management function sends the SUPI to the first mobility management function.

The unified data management function may further send other identification information of the tag to the first mobility management function. For the other identification information, refer to step S1. Details are not described herein again.

In a possible implementation, S2 to S4 are performed, so that the first mobility management function obtains the identification information of the second mobility management function from the unified data management function based on the registration request message, and the second mobility management function stores the context information of the tag.

S5: The first mobility management function obtains the context information of the tag from the second mobility management function.

The first mobility management function obtains the context information of the tag from the second mobility management function based on the permanent identification information of the tag and the identification information of the second mobility management function.

Further, after receiving the identification information that is of the second mobility management function and that is sent by the unified data management function, the first mobility management function determines the second mobility management function. The first mobility management function obtains the context information of the tag from the second mobility management function based on the permanent identification information of the tag.

The context information of the tag includes but is not limited to information such as a key of the tag, a secure algorithm (for example, an air interface encryption and integrity protection algorithm), a security capability of the tag, a counter value, or a timer value. This is not limited herein. That the first mobility management function establishes a connection for the tag based on the context information of the tag includes: establishing a secure connection for the tag based on secure context information (for example, the key of the tag, the secure algorithm, and the security capability of the tag) in the context information. The secure connection includes an air interface secure connection and a non-access stratum secure connection.

The context information of the tag further includes context information of a session. Specifically, the context information of the session includes a session identifier, related information about a session management function that provides a service for the session, or the like. The first mobility management function updates a user plane connection for the tag based on the context information of the session. For example, the first mobility management function re-establishes or updates an N3 user plane connection for the tag. In a possible implementation, the first mobility management function obtains the context information of the tag from the second mobility management function based on identification information that is of another tag and that is sent by the unified data management function.

It should be noted that, when the identification information of the first mobility management function is the same as the identification information of the second mobility management function, the first mobility management function obtains the context information of the tag from the first mobility management function.

For example, the first mobility management function requests the context information of the tag from the second mobility management function by using a service-based interface message (Namf_Communication_UEContextTransfer). The second mobility management function sends the context information of the tag to the first mobility management function by using a service-based interface message (Namf_Communication_UEContextTransfer).

In this embodiment of this application, a passive tag does not store the identification information of the tag in the cellular network, for example, permanent or temporary identifiers such as an SUCI, an SUPI, and a 5G-GUTI. Therefore, when the passive tag moves to a new access network device, the network side cannot learn of mobility of the passive tag based on the identification information of the tag, that is, cannot learn of a source access network device or source mobility management that serves the passive tag. In addition, because the passive tag does not have connectivity, the network side cannot perceive the mobility of the tag. In this embodiment of this application, the registration request message sent by the access network device to the first mobility management function includes the identification information of the tag and/or the first indication information, so that before executing a procedure of registering the tag, the first mobility management function first queries, in the unified data management function, whether there is a mobility management function that serves the tag, to obtain the context information of the tag. Secure context information of the tag is reused, and access authentication does not need to be performed on the tag again, Mobility of the tag is managed, to avoid performing frequent authentication in a process in which the tag accesses the new access network device, and save communication resources.

It should be noted that, in FIG. 6a, when the first mobility management function receives the identification information of the tag in the registration request message, the first mobility management function obtains the context information of the tag from the first mobility management function based on the registration request message.

For example, the identification information of the tag is the subscription concealed identifier of the tag, a part of the subscription concealed identifier of the tag is plaintext information, the plaintext information indicates the tag, and the first mobility management function obtains the context information of the tag from the first mobility management function based on the registration request message. Specifically, the first mobility management function obtains the context information that is of the tag and that is indicated by the plaintext information. Optionally, the registration request message includes second indication information, and the first mobility management function obtains, from the first mobility management function based on the second indication information, the context information that is of the tag and that is indicated by the plaintext information.

Optionally, when the first mobility management function does not store the context information of the tag, the first mobility management function may further perform S2 to S5, to obtain the context information of the tag from the second mobility management function fed back by the unified data management function.

Based on the embodiment shown in FIG. 6a, FIG. 6b-1 and FIG. 6b-2 are a schematic flowchart of an embodiment of a tag management method according to an embodiment of this application. The tag management method provided in this embodiment of this application includes the following steps.

601: A source (R)AN initiates a control plane channel establishment procedure.

In this embodiment, the (R)AN establishes a control plane channel at a granularity of a (R)AN or at a granularity of a tag. For a specific establishment method, refer to steps C1 to C9.

In step 601, a (R)AN that currently serves the tag is referred to as the source (R)AN.

602: The tag moves to a target (R)AN.

In step 602, the tag moves from a coverage area (or a service area) of the source (R)AN to a coverage area (or a service area) of the target (R)AN. In other words, the tag requires the target (R)AN to provide a communication service. The target (R)AN finds, in an inventorying procedure, that the tag moves to the coverage area of the target (R)AN. For a specific inventorying procedure, refer to related descriptions in FIG. 3. The (R)AN serves as a reader. Details are not described herein again.

Specifically, there may be two scenarios:
(1) An AMF that serves the source (R)AN is the same as an AMF that serves the target (R)AN. In other words, a first AMF serves the source (R)AN and the target (R)AN.
(2) An AMF that serves the source (R)AN is different from an AMF that serves the target (R)AN. In other words, a first AMF serves the target (R)AN, and a second AMF serves the source (R)AN.

603: The target (R)AN sends a registration request message to the first AMF, where the registration request message is used to request to register the tag in a core network.

Further, the registration request message may be non-access stratum signaling based on a non-access stratum (Non-Access Stratum, NAS) protocol stack, and an existing case in which the registration request message is sent by using non-access stratum signaling on a network side is still used, to reduce a change to the network side, and effectively ensure information security. The registration request message may alternatively be next-generation application protocol signaling based on a next-generation application protocol (Next-generation Application Protocol, NGAP) protocol stack. This is not limited herein.

The registration request message includes identification information of the tag, and the identification information of the tag is used to identify the tag, or indicates identity information of the tag. The identification information of the tag includes but is not limited to one or more of an electronic product code of the tag, a unique identifier of the tag, a permanent identifier of the tag, an external identifier of the tag, or a temporary identifier of the tag. Specifically, for the identification information of the tag, refer to step S1. Details are not described herein again.

Optionally, the identification information of the tag includes a subscription concealed identifier of the tag, and a part of the subscription concealed identifier of the tag is plaintext information. The plaintext information includes one or more of an electronic product code of the tag, a unique identifier of the tag, a permanent identifier of the tag, an external identifier of the tag, or a temporary identifier of the tag.

In a possible implementation, the registration request message may include an SUCI of the tag and first indication information. The first indication information indicates that a registration status of the tag needs to be queried, or the first indication information indicates that whether there is an AMF that serves the tag needs to be queried. In a possible implementation, the first indication information is registration check indication (registration check indication, RCI) information.

A possible implementation scenario is as follows: When the target (R)AN inventories all currently managed tags (tag), if the target (R)AN finds a new tag (tag), the target (R)AN initiates a procedure of being delegated to register the new tag, is delegated to establish a control plane channel of the new tag, and performs step 603.

604: The first AMF sends a query message to a UDM, where the query message is used to query whether there is an AMF that serves the tag.

Further, the first AMF sends the query message to the UDM. The query message is used to query whether there is an AMF that serves the tag. The query message includes but is not limited to the identification information of the tag. The identification information of the tag includes one or more of a subscription concealed identifier SUCI of the tag, an electronic product code of the tag, a unique identifier of the tag, a permanent identifier of the tag, an external identifier of the tag, or a temporary identifier of the tag. For descriptions of the identification information of the tag, refer to step 603. Details are not described herein again.

In a possible implementation, the first AMF sends the query message to the UDM based on the first indication information in the registration request message. The first indication information indicates to query the registration status of the tag, or the first indication information indicates to query whether there is an AMF that serves the tag, or the first indication information indicates to query whether there is an AMF that stores the context information of the tag.

For example, the query message may be "Nudm_UECM_Get Request".

Optionally, before step 604, the first mobility management function determines that the first mobility management function does not store the context information of the tag. Specifically, the first AMF detects, based on the registration request message, whether the first AMF locally stores the context information of the tag. If the first AMF determines that the first AMF does not store the context information of the tag, step 605 is performed.

605: The UDM determines, based on the query message, a second AMF that provides a service for the tag.

Further, the UDM queries, based on the query message, whether there is an AMF that serves the tag. In this embodiment of this application, for ease of description, the AMF that serves the tag is referred to as the second AMF. The query message includes the identification information of the tag.

In a possible implementation, when the query message includes the SUCI of the tag, the UDM first maps the SUCI to the corresponding SUPI. The UDM stores the SUPI and related context information of the SUPI, and the context information includes but is not limited to the registration status of the tag and related information about a network function (or referred to as a network element) that serves the SUPI (or the tag corresponding to the SUPI). The related information includes identification information of the network element and/or address information of the network element.

For example, the UDM queries a registration status of the SUPI. If the SUPI is registered, the UDM queries which AMF is an AMF that serves the SUPI, and feeds back identification information of the AMF to the found AMF (the first AMF). The identification information of the AMF may be address information of the AMF, for example, an internet protocol address (Internet Protocol address, IP address) of the AMF. If the SUPI is in a non-registered state or a deregistered state, there is no AMF that serves the SUPI. Further, the UDM feeds back third indication information to the first AMF. The third indication information indicates that a query fails or no information is found (step 610).

The UDM determines, based on the query message, that there is a second AMF that provides a service for the tag, and then step 606 is performed.

In another possible implementation, when the identification information that is of the tag and that is included in the query message is the SUCI, the SUCI includes plaintext information. The UDM queries, based on the plaintext information in the SUCI, whether there is a second AMF that provides a server for the tag.

606: If there is a second AMF that provides a service for the tag, the UDM sends identification information of the second AMF to the first AMF.

The identification information of the second AMF includes but is not limited to an IP address of the second AMF, a MAC address of the second AMF, and the like.

In a possible implementation, the UDM further sends permanent identification information of the tag to the first AMF. The permanent identification information of the tag includes but is not limited to an EPC code of the tag, an SUPI of the tag, or a MAC address of the tag. For example, in step 604, the first AMF sends the SUCI to the UDM, the UDM obtains the SUPI corresponding to the SUCI, and the UDM sends the SUPI to the first AMF.

The UDM may further send identification information of another tag of the tag to the first AMF. For the identification information of the tag, refer to step 603. Details are not described herein again.

607: The first AMF obtains the context information of the tag from the second AMF.

Specifically, the first mobility management function obtains the context information of the tag from the second mobility management function based on the permanent identification information of the tag and the identification information of the second mobility management function. Further, after receiving the identification information that is of the second AMF and that is sent by the UDM, the first AMF determines the second AMF. The first AMF obtains the context information of the tag from the second AMF based on the permanent identification information of the tag.

The context information of the tag includes but is not limited to information such as a key of the tag, a secure algorithm (for example, an air interface encryption and integrity protection algorithm), a security capability of the tag, a counter value, or a timer value. This is not limited herein. That the first mobility management function establishes a connection for the tag based on the context information of the tag includes: establishing a secure connection for the tag based on secure context information (for example, the key of the tag, the secure algorithm, and the security capability of the tag) in the context information. The secure connection includes an air interface secure connection and/or a non-access stratum secure connection.

The context information of the tag may further include context information of a session. Specifically, the context information of the session includes a session identifier, related information about a session management function that provides a service for the session, or the like. The first mobility management function updates a user plane connection for the tag based on the context information of the session. For example, the first mobility management function re-establishes or updates an N3 user plane connection for the tag. In a possible implementation, the first AMF obtains the context information of the tag from the second AMF based on the identification information that is of the another tag and that is sent by the UDM.

It should be noted that, when the identification information of the first AMF is the same as the identification information of the second AMF, the first AMF obtains the context information of the tag from the first AMF.

For example, the first AMF requests the context information of the tag from the second AMF by using a service-based interface message (Namf_Communication_UEContextTransfer). The second AMF sends the context information of the tag to the first AMF by using a service-based interface message (Namf_Communication_UEContextTransfer).

608: The first AMF notifies the UDM that a mobility management function that serves the tag is updated.

In a possible implementation, after the first AMF obtains the context information of the tag, the first AMF notifies the UDM that the mobility management function that serves the tag is updated to the first AMF. For example, the first AMF sends an Nudm_UECM_Registration Request message to the UDM. The message carries an NF ID, an SUPI, and an NF type. Herein, "NF ID" is a network function (Network Function, NF) identifier, and is an identifier of the first AMF herein, "SUPI" is an identifier of the tag, and "NF Type" is a type of the first AMF.

It should be noted that, an execution sequence of step 607 and step 608 is not limited herein.

609: The first AMF sends the context information of the tag to the target (R)AN.

It should be noted that, step 609 may be performed after step 607. When step 608 is performed, step 608 may be performed before step 609; or step 608 may be performed after step 609. This is not limited herein.

Further, after the first AMF obtains the context information of the tag, the first AMF establishes a communication connection to the tag based on the context information of the tag. The communication connection may be an N2 connection. This is not limited herein. Specifically, the first AMF sends the context information of the tag to the target (R)AN. After obtaining the context information of the tag, the target (R)AN can establish a secure air interface with the tag based on the context information of the tag. The context information that is of the tag and that is sent by the first AMF to the target (R)AN may be a part or all of the context information that is of the tag and that is obtained by the first AMF. For example, the first AMF sends air interface related secure context information of the tag to the target (R)AN. The target (R)AN establishes the secure air interface with the tag based on the air interface related secure context information. The first AMF sends a registration accept (registration accept) message to the target (R)AN, to indicate that a communication connection is established with the tag. 609 may specifically include 609a and 609b. Descriptions are as follows:

609a: The first AMF sends the registration accept message to the target (R)AN.

609b: The second AMF and the source (R)AN release the context information of the tag.

If a state of the tag before the tag moves to the target (R)AN is a connected state, the second AMF and the source (R)AN execute an N2 context release procedure, and the source (R)AN is a (R)AN that provides a communication service for the tag before the target (R)AN.

610: If there is no second AMF that provides a service for the tag, the UDM sends the third indication information to the first AMF, where the third indication information indicates that there is currently no AMF that serves the tag.

After step 605, for example, the UDM queries a registration status of the SUPI (corresponding to the tag). If the SUPI is in a non-registered state or a deregistered state, it is determined that there is no AMF that serves the SUPI. In other words, there is no AMF that serves the tag. Further, the UDM feeds back the third indication information to the first AMF. The third indication information indicates that a query fails or no information is found.

It should be noted that, for a same tag, the UDM performs step 606 or step 610.

611: If the first AMF receives the third indication information, the first AMF executes the procedure of registering the tag.

After step 610, if the first AMF receives the third indication information, the first AMF executes the procedure of registering the tag.

In this embodiment of this application, because the (R)AN is delegated to execute a procedure of registering a passive tag, the passive tag does not store identification information of the tag in a cellular network, for example, permanent or temporary identifiers such as an SUCI, an SUPI, and a 5G-GUTI. Therefore, when the passive tag moves to a new (R)AN, the network side cannot learn of mobility of the passive tag based on the identification information of the tag, that is, cannot learn of a source (R)AN or source AMF that serves the passive tag. In addition, because the passive tag does not have connectivity, the network side cannot perceive the mobility of the tag. In this embodiment of this application, the registration request message sent by the (R)AN to the first AMF includes the identification information of the tag and/or the first indication information, so that before executing a procedure of registering the tag, the first AMF first queries, in the UDM, whether there is an AMF that serves the tag, to obtain the context information of the tag. Secure context information of the tag is reused, and access authentication does not need to be performed on the tag again, Mobility of the tag is managed, to avoid performing frequent authentication in a process in which the tag accesses the new (R)AN, and save communication resources.

Based on the embodiments shown in FIG. 6a and FIG. 6b-1 and FIG. 6b-2, the following describes an application scenario in embodiments of this application. Specifically, the application scenario is as follows: A tag moves from a source (R)AN to a target (R)AN, and an AMF that provides a service for the source (R)AN is the same as an AMF that provides a service for the target (R)AN. The following describes a tag management method in the application scenario in detail with reference to the accompanying drawings.

FIG. 7 is a schematic flowchart related to an embodiment of this application. A tag management method provided in this embodiment of this application includes the following steps.

701: A source (R)AN initiates a control plane channel establishment procedure at a granularity of a tag.

702: The tag moves to a target (R)AN.

703: The target (R)AN sends a registration request message to a first AMF, where the registration request message is used to request to register the tag in a core network.

Steps 701 to 703 are the same as steps 601 to 603. Details are not described herein.

704: The first AMF sends a query message to a UDM, where the query message is used to query whether there is an AMF that serves the tag.

Step 704 is consistent with step 604. Details are not described herein again.

705: The UDM determines, based on the query message, a second AMF that provides a service for the tag.

706: If there is a second AMF that provides a service for the tag, the UDM sends identification information of the second AMF to the first AMF.

Steps 705 and 706 are the same as steps 605 and 606. Details are not described herein.

707: If the second AMF is consistent with the first AMF, the first AMF obtains context information of the tag based on permanent identification information of the tag.

Further, if there is a second AMF that provides a service for the tag, the UDM sends the identification information of the second AMF and the permanent identification information of the tag to the first AMF. The identification information of the second AMF includes but is not limited to an IP address of the second AMF, a MAC address of the second AMF, and the like. The permanent identification information of the tag includes but is not limited to an EPC code of the tag or a MAC address of the tag. When the first AMF determines that the identification information of the second AMF is the same as identification information of the first AMF, the second AMF is consistent with the first AMF. The first AMF obtains the context information of the tag based on the permanent identification information of the tag.

708: The first AMF sends the context information of the tag to the target (R)AN.

Step 708 is consistent with step 609. Details are not described herein again.

709: The first AMF notifies the UDM that status information of the tag is updated.

Step 709 is consistent with step 608. Details are not described herein again.

710: If there is no second AMF that provides a service for the tag, the UDM sends third indication information to the first AMF, where the third indication information indicates that there is currently no AMF that serves the tag.

711: If the first AMF receives the third indication information, the first AMF executes a procedure of registering the tag.

Steps 710 and 711 are consistent with steps 610 and 611. Details are not described herein.

An embodiment of this application further provides a tag management method. Specifically, FIG. 8A and FIG. 8B are a schematic flowchart of an embodiment of a tag management method according to an embodiment of this application. The tag management method provided in this embodiment of this application includes the following steps.

801: A source (R)AN initiates a control plane channel establishment procedure at a granularity of a tag.

802: The tag moves to a target (R)AN.

803: The target (R)AN sends a registration request message to a first AMF, where the registration request message is used to request to register the tag in a core network.

Steps 801 to 803 are consistent with steps 601 to 603. Details are not described herein.

804: The first AMF obtains context information of the tag based on the registration request message.

Further, after receiving the registration request message, the first AMF obtains the context information of the tag based on identification information that is of the tag and that is included in the registration request message. Specifically, the first AMF checks whether data stored in the first AMF includes the context information of the tag.

The registration request message includes a subscription concealed identifier of the tag, and a part of the subscription concealed identifier of the tag is plaintext information.

The plaintext information includes one or more of an electronic product code of the tag, a unique identifier of the tag, a permanent identifier of the tag, an external identifier of the tag, or a temporary identifier of the tag.

Further, the registration request message further includes second indication information, and the second indication information indicates the first mobility management function to query whether the context information of the tag is stored. That the first mobility management function obtains, from the first mobility management function, context information that is of the tag and that is indicated by the plaintext information includes: The first mobility management function obtains, from the first mobility management function based on the second indication information, the context information that is of the tag and that is indicated by the plaintext information.

When the first AMF stores the context information of the tag, step 810 is performed, and steps 805 to 808 are not performed. It should be noted that, when step 810 is performed, step 809 (step 809 is an optional step) may be performed.

When step 804 is performed, when the first AMF does not store the context information of the tag, steps 805 to 808 (steps 805 to 808 are optional steps) are performed.

805: The first AMF sends a query message to a UDM, where the query message is used to query whether there is an AMF that serves the tag.

806: The UDM determines, based on the query message, a second AMF that provides a service for the tag.

807: If there is a second AMF that provides a service for the tag, the UDM sends identification information of the second AMF to the first AMF.

808: The first AMF obtains the context information of the tag from the second AMF.

Steps 805 to 808 are similar to steps 604 to 607. Details are not described herein. A difference is that the query message includes second indication information, and the second indication information indicates the UDM to query whether there is an AMF that serves the tag.

809: The first AMF notifies the UDM that status information of the tag is updated.

810: The first AMF sends the context information of the tag to the target (R)AN.

811: If there is no second AMF that provides a service for the tag, the UDM sends third indication information to the first AMF, where the third indication information indicates that there is currently no AMF that serves the tag.

812: If the first AMF receives the third indication information, the first AMF executes a procedure of registering the tag.

Steps 809 to 812 are consistent with steps 709 to 711. Details are not described herein.

In this embodiment of this application, because the (R)AN is delegated to execute a procedure of registering a passive tag, the passive tag does not store identification information of the tag in a cellular network, for example, permanent or temporary identifiers such as an SUCI, an SUPI, and a 5G-GUTI. Therefore, when the passive tag moves to a new (R)AN, the network side cannot learn of mobility of the passive tag based on the identification information of the tag, that is, cannot learn of a source (R)AN or source AMF that serves the passive tag. In addition, because the passive tag does not have connectivity, the network side cannot perceive the mobility of the tag. In this embodiment of this application, the registration request message sent by the access network device to the first AMF includes the identification information of the tag and/or the second indication information, so that before executing the procedure of registering the tag, the first AMF detects whether the first AMF (the first AMF) stores the context information of the tag, to obtain the context information of the tag. Secure context information of the tag is reused, and access authentication does not need to be performed on the tag again. Mobility of the tag is managed, to avoid performing frequent authentication in a process in which the tag accesses the new access network device, and save communication resources.

Based on the foregoing embodiments, an embodiment of this application further provides a tag management method. Specifically, FIG. 9a is a schematic flowchart of an embodiment of a tag management method according to an embodiment of this application. It should be noted that, the embodiment shown in FIG. 9a may be combined with the foregoing embodiments. The tag management method provided in this embodiment of this application includes the following steps.

K1: An access network device sends a request message, where the request message indicates a tag to send a response message for the request message.

Further, the request message may be an operation instruction related to the Internet of things, for example, may be a select command in step B1, or may be a query command in step B2, or may be an acknowledgment command in step B4, or may be another newly defined message. This is not limited herein. The request message may be a broadcast message, that is, indicate all tags currently managed by the access network device to send the response message for the request message. The request message may alternatively be a unicast or multicast message, that is, indicate one or more tags currently managed by the access network device to send the response message for the request message.

In a possible implementation, when the access network device learns, through inventorying, that a new non-registered tag exists in the tag currently managed by the access network device, the access network device is delegated to establish a control plane channel for the tag.

The access network device may further enable a counter and/or timer corresponding to the tag. For a specific method, refer to subsequent embodiments.

K2: The access network device receives the response message for the request message.

K3: The access network device determines that a target tag is disconnected.

The target tag is a tag from which the access network device expects to obtain a response in step K1. If the tag does not return the response message in a plurality of inventorying events or does not return the response message for a long period of time, a network side determines that the tag is not in an area currently covered by the access network device or the tag is invalid. The tag is referred to as the target tag. The access network device determines that the target tag is disconnected. The access network device does not need to store context information of the tag for the target tag.

K4: The access network device releases the context information corresponding to the target tag.

The access network device releases context information corresponding to the target tag. Specifically, N2 context information corresponding to the target tag is released, and the target tag enters an idle state (CM-IDLE state).

The context information corresponding to the target tag includes but is not limited to information such as a key of the target tag, a secure algorithm (for example, an air interface encryption and integrity protection algorithm), a security capability of the target tag, a counter value, or a timer value. In a possible implementation, the access network device obtains the context information of the target tag from an AMF.

In this embodiment of this application, because a passive tag cannot actively send a signal to the network side, the network side cannot learn of connectivity of the tag in real time. After the access network device is delegated to execute a procedure of registering the tag, a counter or a timer is enabled. The access network device sends the request message. The request message indicates the tag to send the response message for the request message to the access network device. The access network device performs statistics collection and determining based on the response message, to determine connectivity of the passive tag. If the tag does not return the response message in a plurality of inventorying events or does not return the response message for a long period of time, the network side determines that the tag is not in an area currently managed by the access network device or the tag is invalid, in other words, the network side considers that a current server temporarily does not need to obtain related information about the tag. Therefore, the access network device does not need to store context information of the tag for the tag. Therefore, the access network device may initiate an access network release procedure of the tag, so that the tag enters an idle state, to save resources such as network side storage space.

Based on the embodiment shown in FIG. 9a, FIG. 9b is a schematic flowchart of an embodiment of a tag management method according to an embodiment of this application. The tag management method provided in this embodiment of this application includes the following steps.

901: A (R)AN sends a request message, where the request message indicates a tag to send a response message for the request message.

Further, the request message may be an operation instruction related to the Internet of things, for example, may be a select command in step B1, or may be a query command in step B2, or may be an acknowledgment command in step B4, or may be another newly defined message. This is not limited herein. The request message may be a broadcast message, that is, indicate all tags currently managed by the (R)AN to send the response message for the request message. The request message may alternatively be a unicast or multicast message, that is, indicate one or more tags currently managed by the (R)AN to send the response message for the request message.

In a possible implementation, when the (R)AN learns, through inventorying, that a new non-registered tag exists in the tag currently managed by the (R)AN, the (R)AN is delegated to establish a control plane channel for the tag.

The (R)AN may further enable a counter and/or timer corresponding to the tag. Specifically, a technical solution for enabling the timer of the tag corresponds to steps 906 to 908, and a technical solution for enabling the counter of the tag corresponds to steps 903 to 905. It should be noted that, an execution sequence between a step in which the (R)AN is delegated to establish a control plane channel for the tag and step 901 is not limited herein.

902: The (R)AN receives the response message for the request message.

Further, the (R)AN receives the response message for the request message. After step 902, steps 903 to 905 may be performed, or steps 906 to 908 may be performed. The following separately provides descriptions.

903: When the response message for the request message does not include identification information of a target tag, the (R)AN updates a first value corresponding to the target tag.

If the tag does not return the response message in a plurality of inventorying events or does not return the response message for a long period of time, a network side determines that the tag is not in an area currently covered by the (R)AN or the tag is invalid. The tag is the target tag, the target tag is disconnected to the (R)AN, and the (R)AN does not need to store context information of the tag for the target tag.

The identification information of the target tag includes but is not limited to one or more of an electronic product code of the target tag, a unique identifier of the target tag, a permanent identifier of the target tag, an external identifier of the target tag, a temporary identifier of the target tag, or data information of the target tag. The following separately provides descriptions:

The electronic product code of the target tag may be an electronic product code (Electronic Product Code, EPC), for example, "urn:epc:id:sgtin:CompanyPrefix.ItemRefAndIndicator.SerialNumber". Herein, "sgtin" indicates that an item or an object identified by the EPC code is a commodity; "CompanyPrefix" is used to identify a management entity or a representative, and may be understood as being used to identify an enterprise (or a manufacturer); "ItemRefAndIndicator" may also be referred to as "Item Reference", and is used to identify a specific object type, for example, clothes, articles of daily use, or food; and "SerialNumber", that is, a serial number, is used to identify the item or the object.

The unique identifier of the target tag may be a media access control address (Media Access Control Address, MAC) of the target tag.

The permanent identifier of the target tag may be information such as a subscription permanent identifier (subscription permanent identifier, SUPI) of the target tag, or a credential (credential) of the target tag.

The external identifier of the target tag may be another identifier allocated by the (R)AN or another external device (for example, a server) to the target tag, for example, a generic public subscription identifier (generic public subscription identifier, GPSI) of the target tag. The temporary identifier of the target tag may be a temporarily used identifier allocated by the (R)AN or the another external device (for example, the server) to the target tag.

The identification information of the target tag may alternatively be a subscription concealed identifier (subscription concealed identifier, SUCI). The SUCI is identification information generated after the SUPI is encrypted.

The identification information of the target tag may alternatively be a variant of the foregoing various identifiers. This is not limited herein.

For example, when tags managed by the (R)AN include a tag 1, a tag 2, a tag 3, and a tag 4, and the response message for the request message does not include the identification information of the target tag, for example, the tag 2 is the target tag, the response message that is for the request message and that is received by the (R)AN does not include identification information of the tag 2, and the (R)AN updates a first value corresponding to the tag 2. For example, before step 901, the first value corresponding to the tag 2 is 0. When the response message that is for the request message and that is received by the (R)AN in step 903 does not include the identification information of the tag 2, the (R)AN updates the first value corresponding to the tag 2 to 1.

Step 905 is performed after step 903.

904: When the (R)AN does not receive a response message that is for the request message and that is sent by the target tag, the (R)AN updates the first value corresponding to the target tag.

Further, step 904 is used as another possible implementation in parallel to step 903 after step 902. When the (R)AN does not receive the response message that is for the request message and that is sent by the target tag, the (R)AN updates the first value corresponding to the target tag. The response message that is for the request message and that is sent by the target tag includes the identification information of the target tag, and the identification information of the target tag is similar to the identification information of the target tag in step 903. Details are not described herein again.

Step 905 is performed after step 904.

905: When the first value corresponding to the target tag reaches a first threshold, the (R)AN releases context information corresponding to the target tag.

For example, the first threshold may be configured on the (R)AN. For example, if the first threshold is 10 or 70, the (R)AN determines that the target tag is disconnected, and releases the context information corresponding to the target tag. Specifically, N2 context information corresponding to the target tag is released, and the target tag enters an idle state (CM-IDLE state).

In a possible implementation, the (R)AN enables a deregistration timer. After the deregistration timer enabled by the (R)AN expires, the (R)AN marks the tag with a deregistered state. In a possible implementation, an AMF enables an implicit deregistration timer. After the deregistration timer enabled by the AMF expires, the AMF marks the tag with a deregistered state.

In a possible implementation, a first value corresponding to a counter of the target tag is reset.

906: The (R)AN enables a timer.

In a possible implementation, after the (R)AN sends the request message in step 901, the (R)AN enables the timer. The timer may be a timer at a granularity of a tag. For example, each tag found by the (R)AN through inventorying corresponds to one timer. After sending a request message, the (R)AN enables a timer corresponding to each tag. The timer may alternatively be a timer at a granularity of a (R)AN. For example, one timer is enabled each time after the (R)AN sends a request message.

In another possible implementation, after the (R)AN finds a tag for a first time through inventorying, the (R)AN enables a timer.

In another possible implementation, after the (R)AN finds a tag for a first time through inventorying, the (R)AN obtains context information of the tag. After the (R)AN obtains the context information of the tag, the (R)AN enables a timer. The context information of the tag includes but is not limited to information such as a key of the tag, a secure algorithm (for example, an air interface encryption and integrity protection algorithm), a security capability of the tag, a counter value, or a timer value. In a possible implementation, the (R)AN obtains the context information of the tag from the AMF.

After step 906, step 907 or step 908 is performed.

907: After the timer expires, when the response message that is for the request message and that is received by the (R)AN does not include the identification information of the target tag, the (R)AN releases the context information corresponding to the target tag.

Further, after the timer expires, when the response message for the request message does not include the identification information of the target tag, the (R)AN determines that the target tag is disconnected, and the (R)AN releases the context information corresponding to the target tag. The identification information of the target tag includes but is not limited to one or more of an electronic product code of the tag, a unique identifier of the tag, a permanent identifier of the tag, an external identifier of the tag, or a temporary identifier of the tag.

For example, a countdown time period of the timer is 10 seconds or 70 seconds. When the timer expires, that is, when the countdown time period of the timer ends, if the response message that is for the request message and that is received by the (R)AN does not include the identification information of the target tag, the (R)AN determines that the target tag is disconnected, and releases the context information corresponding to the target tag. Specifically, N2 context information corresponding to the target tag is released, and the target tag enters an idle state (CM-IDLE state).

In a possible implementation, the (R)AN enables a deregistration timer. After the deregistration timer enabled by the (R)AN expires, the (R)AN marks the tag with a deregistered state. In a possible implementation, the AMF enables an implicit deregistration timer. After the deregistration timer enabled by the AMF expires, the AMF marks the tag with a deregistered state.

908: After the timer expires, when the (R)AN does not receive the response message that is for the request message and that is sent by the target tag, the (R)AN releases the context information corresponding to the target tag.

Further, after the timer expires, when the response message that is for the request message and that is sent by the target tag is not received, the (R)AN determines that the target tag is disconnected, and the (R)AN releases the context information corresponding to the target tag. The identification information of the target tag includes but is not limited to one or more of an electronic product code of the tag, a unique identifier of the tag, a permanent identifier of the tag, an external identifier of the tag, or a temporary identifier of the tag.

For example, a countdown time period of the timer is 10 seconds or 70 seconds. When the timer expires, that is, when the countdown time period of the timer ends, if the (R)AN does not receive the response message that is for the request message and that is sent by the target tag, the (R)AN determines that the target tag is disconnected, and releases the context information corresponding to the target tag. Specifically, N2 context information corresponding to the target tag is released, and the target tag enters an idle state (CM-IDLE state).

In a possible implementation, the (R)AN enables a deregistration timer. After the deregistration timer enabled by the (R)AN expires, the (R)AN marks the tag with a deregistered state. In a possible implementation, the AMF enables an implicit deregistration timer. After the deregistration timer enabled by the AMF expires, the AMF marks the tag with a deregistered state.

It should be noted that, before the deregistration timer or the implicit deregistration timer expires, when the (R)AN finds the target tag again through inventorying, the (R)AN and the AMF re-establish an N2 connection related to the target tag, and the target tag is restored to a connected state (CM-CONNECTED). After the deregistration timer or the implicit deregistration timer expires, if the (R)AN does not find the target tag through inventorying, the network side executes a procedure of deregistering the target tag.

In this embodiment of this application, because a passive tag cannot actively send a signal to the network side, the network side cannot learn of connectivity of the tag in real time. After the (R)AN is delegated to execute a procedure of registering the tag, a counter or a timer is enabled. The (R)AN sends the request message. The request message indicates the tag to send the response message for the request message to the (R)AN. The (R)AN performs statistics collection and determining based on the response message, to determine connectivity of the passive tag. If the tag does not return the response message in a plurality of inventorying events or does not return the response message for a long period of time, the network side determines that the tag is not in an area currently managed by the (R)AN or the tag is invalid, in other words, the network side considers that a current server temporarily does not need to obtain related information about the tag. The (R)AN does not need to store context information of the tag for the tag. Therefore, the (R)AN may initiate an access network release procedure of the tag, so that the tag enters an idle state, to save resources such as network side storage space.

The foregoing mainly describes the solutions provided in embodiments of this application from a perspective of methods. It can be understood that, to implement the foregoing functions, the communication apparatus (a first AMF, a second AMF, a UDM, and/or an access network device) includes a hardware structure and/or a software module corresponding to each function. A person skilled in the art should be easily aware that modules, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solution. A person skilled in the art may use different methods to implement the described functions for each particular application, but it should not be considered that the implementation goes beyond the scope of this application.

In embodiments of this application, the communication apparatus may be divided into functional modules based on the method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

The following describes a communication apparatus in this application in detail. FIG. 10 is a schematic diagram of an embodiment of a communication apparatus according to an embodiment of this application. The communication apparatus may be deployed in a network device or a chip system. A communication apparatus 1000 may be configured to perform some or all steps performed by a first mobility management function in the embodiments shown in FIG. 6a, FIG. 6b-1 and FIG. 6b-2, FIG. 7, and FIG. 8A and FIG. 8B. For details, refer to related descriptions in the embodiments shown in FIG. 6a, FIG. 6b-1 and FIG. 6b-2, FIG. 7, and FIG. 8A and FIG. 8B.

An example is as follows:
A transceiver module 1001 is configured to receive a registration request message sent by an access network device. The registration request message is used to request to register a tag in a core network.

The transceiver module 1001 is further configured to obtain identification information of a second access and management function from a unified data management function based on the registration request message. The second mobility management function stores context information of the tag.

The transceiver module 1001 is further configured to obtain the context information of the tag from the second mobility management function.

In a possible implementation, the registration request message includes identification information of the tag, the identification information of the tag includes a subscription concealed identifier of the tag, and a part of the subscription concealed identifier of the tag is plaintext information.

The transceiver module 1001 is specifically configured to obtain, from the second mobility management function, the context information that is of the tag and that is indicated by the plaintext information.

In a possible implementation, the plaintext information includes one or more of an electronic product code of the tag, a unique identifier of the tag, a permanent identifier of the tag, an external identifier of the tag, or a temporary identifier of the tag.

In a possible implementation, the transceiver module 1001 is specifically configured to send a query message to the unified data management function. The query message includes the identification information of the tag.

The transceiver module 1001 is specifically configured to receive permanent identification information of the tag and the identification information of the second mobility management function from the unified data management function.

The transceiver module 1001 is specifically configured to obtain the context information of the tag from the second mobility management function based on the permanent identification information of the tag and the identification information of the second mobility management function.

In a possible implementation, the registration request message further includes first indication information, and the first indication information indicates to query whether there is a mobility management function that stores the context information of the tag.

The transceiver module 1001 is specifically configured to obtain the identification information of the second mobility management function from the unified data management function based on the first indication information.

In a possible implementation, the transceiver module 1001 is specifically configured to send a query message to the unified data management function. The query message includes the first indication information.

The transceiver module 1001 is specifically configured to receive the identification information of the second mobility management function from the unified data management function.

In a possible implementation, the second mobility management function is the same as a first mobility management function.

In a possible implementation, the transceiver module 1001 is further configured to send the context information of the tag to the access network device.

In a possible implementation, a processing module 1002 is configured to determine that the first mobility management function does not store the context information of the tag.

In a possible implementation, the processing module 1002 is a processor.

In a possible implementation, the processing module 1002 is a processor, and the transceiver module 1001 is a transceiver.

In a possible implementation, the processing module 1002 is a processor.

In a possible implementation, the processing module 1002 is a processor, and the transceiver module 1001 is a transceiver.

Another example is as follows:
A transceiver module 1001 is configured to receive a registration request message sent by an access network device. The registration request message is used to request to register a tag in a core network, the registration request message includes a subscription concealed identifier of the tag, and a part of the subscription concealed identifier of the tag is plaintext information.

The transceiver module 1001 is further configured to obtain, from a first mobility management function, context information that is of the tag and that is indicated by the plaintext information.

In a possible implementation, the plaintext information includes one or more of an electronic product code of the tag, a unique identifier of the tag, a permanent identifier of the tag, an external identifier of the tag, or a temporary identifier of the tag.

In a possible implementation, the registration request message further includes second indication information.

A processing module 1002 is configured to obtain, from the first mobility management function based on the second indication information, the context information that is of the tag and that is indicated by the plaintext information.

In a possible implementation, the processing module 1002 is further configured to determine whether the first mobility management function stores the context information of the tag.

The processing module 1002 is further configured to: when the first mobility management function stores the context information of the tag, obtain the context information of the tag from the first mobility management function based on the registration request message.

In a possible implementation, the transceiver module 1001 is further configured to send the context information of the tag to the access network device.

The communication apparatus 1000 may be configured to perform some or all steps performed by a unified data management function in the embodiments shown in FIG. 6a, FIG. 6b-1 and FIG. 6b-2, FIG. 7, and FIG. 8A and FIG. 8B. For details, refer to related descriptions in the embodiments shown in FIG. 6a, FIG. 6b-1 and FIG. 6b-2, FIG. 7, and FIG. 8A and FIG. 8B.

For example, a transceiver module 1001 is configured to receive a query message sent by a first mobility management function. The query message is used to query whether there is a second mobility management function that stores context information of a tag.

A processing module 1002 is configured to determine the second mobility management function based on the query message.

The transceiver module 1001 is further configured to send identification information of the second mobility management function to the first mobility management function.

In a possible implementation, the query message includes identification information of the tag, and the identification information of the tag is used to identify the tag.

The identification information of the tag includes one or more of an electronic product code of the tag, a unique identifier of the tag, a permanent identifier of the tag, an external identifier of the tag, or a temporary identifier of the tag.

In a possible implementation, the query message further includes first indication information, and the first indication information indicates to query whether there is a mobility management function that stores the context information of the tag.

In a possible implementation, the identification information of the tag further includes a subscription concealed identifier of the tag, the subscription concealed identifier further includes plaintext information, and the plaintext information indicates the tag.

In a possible implementation, the processing module 1002 is further configured to determine permanent identification information of the tag based on the subscription concealed identifier of the tag in the query message.

The transceiver module 1001 is further configured to send the permanent identification information of the tag to the first mobility management function.

In a possible implementation, the transceiver module 1001 is further configured to send third indication information to the first mobility management function. The third indication information indicates that there is currently no second mobility management function that stores the context information of the tag.

In a possible implementation, the identification information of the second mobility management function includes address information of the second mobility management function.

In a possible implementation, the processing module 1002 is a processor.

In a possible implementation, the processing module 1002 is a processor, and the transceiver module 1001 is a transceiver.

The communication apparatus 1000 may be configured to perform some or all steps performed by an access network device in the embodiment shown in FIG. 9a or FIG. 9b. For details, refer to related descriptions in the embodiment shown in FIG. 9a or FIG. 9b.

For example, a transceiver module 1001 is configured to send a request message. The request message indicates a tag to send a response message for the request message to an access network device.

A processing module 1002 is configured to determine that a target tag is disconnected.

The processing module 1002 is further configured to release context information of the target tag.

In a possible implementation, the processing module 1002 is further configured to update a first value corresponding to the target tag when a response message received by the access network device does not include identification information of the target tag.

The processing module 1002 is further configured to release context information corresponding to the target tag when the first value corresponding to the target tag reaches a first threshold.

In a possible implementation, the processing module 1002 is further configured to update a first value corresponding to the target tag when a response message sent by the target tag is not received.

The processing module 1002 is further configured to release context information corresponding to the target tag when the first value corresponding to the target tag reaches a first threshold.

In a possible implementation, the processing module 1002 is further configured to enable a timer.

The processing module 1002 is further configured to release the context information corresponding to the target tag after the timer expires and when a response message received by the access network device does not include identification information of the target tag.

In a possible implementation, the processing module 1002 is further configured to enable a timer.

The processing module 1002 is further configured to release context information corresponding to the target tag when the timer expires and when the access network device does not receive a response message sent by the target tag.

In a possible implementation, the request message includes the identification information of the target tag.

In a possible implementation, the identification information of the target tag is one or more of an electronic product code of the target tag, a temporary identifier of the target tag, a unique identifier of the target tag, a permanent identifier of the target tag, an external identifier of the target tag, or data information of the target tag.

In a possible implementation, the processing module 1002 is a processor.

In a possible implementation, the processing module 1002 is a processor, and the transceiver module 1001 is a transceiver.

It should be noted that, for a specific implementation of the communication apparatus and beneficial effects brought by the communication apparatus, refer to the descriptions in the method embodiments corresponding to FIG. 6a to FIG. 9b. Details are not described herein again.

An embodiment of this application further provides a processing apparatus. The processing apparatus includes a processor and an interface. The processor is configured to perform the tag management method in any one of the method embodiments.

It should be understood that the processing apparatus may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory. The memory may be integrated into the processor, and may be located outside the processor and exist independently.

"Implemented by hardware" means that a function of the module or unit is implemented by using a hardware processing circuit that does not have a program instruction processing function. The hardware processing circuit may include a discrete hardware component, or may be an integrated circuit. To reduce power consumption and a size, the integrated circuit is usually used for an implementation. The hardware processing circuit may include an ASIC (application-specific integrated circuit, application-specific integrated circuit) or a PLD (programmable logic device, programmable logic device). The PLD may further include an FPGA (field programmable gate array, field programmable gate array), a CPLD (complex programmable logic device, complex programmable logic device), and the like. These hardware processing circuits may be a separately packaged semiconductor chip (for example, packaged into an ASIC). Alternatively, the hardware processing circuits may be integrated with another circuit (for example, a CPU and a DSP) and packaged into a semiconductor chip. For example, a plurality of hardware circuits and a CPU may be formed on a silicon substrate, and may be separately packaged into a chip. This chip is also referred to as a SoC. Alternatively, a circuit used to implement an FPGA function and a CPU may be formed on a silicon substrate, and may be separately packaged into a chip. This chip is also referred to as a SoPC (system on a programmable chip, system on a programmable chip).

This application further provides a communication system, including at least one or more of a tag, a first AMF, a second AMF, a (R)AN, or a UDM.

An embodiment of this application further provides a computer-readable storage medium, including instructions. When the instructions run on a computer, the computer controls a communication apparatus to perform any implementation shown in the method embodiments.

An embodiment of this application further provides a computer program product. The computer program product includes computer program code. When the computer program code is run on a computer, the computer executes any implementation shown in the method embodiments.

An embodiment of this application further provides a chip system, including a memory and a processor. The memory is configured to store a computer program, and the processor is configured to invoke and run the computer program from the memory, so that the chip executes any implementation shown in the method embodiments.

An embodiment of this application further provides a chip system, including a processor. The processor is configured to invoke and run a computer program, so that the chip executes any implementation shown in the method embodiments.

In addition, it should be noted that the apparatus embodiments described above are merely an example. The units described as separate parts may or may not be physically separate, and parts displayed as units may or may not be physical units, may be located in one place, or may be distributed on a plurality of network units. Some or all modules may be selected based on an actual requirement, to achieve objectives of the solutions in embodiments. In addition, in the accompanying drawings of the apparatus embodiments provided in this application, connection relationships between modules indicate that the modules have communication connections with each other, and may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function completed by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from one website, computer, communication apparatus, computing device or data center to another website, computer, communication apparatus, computing device or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily mean a same embodiment. In addition, these particular features, structures, or characteristics may be combined in one or more embodiments by using any proper manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe interchangeability between the hardware and the software, the foregoing has generally described compositions and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing system, apparatus, and unit, refer to a corresponding process in the method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one place, or may be distributed on a plurality of network units. Some or all units may be selected based on an actual requirement, to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application.

## Claims

1. A tag management method, comprising:
receiving, by a first mobility management function, a registration request message sent by an access network device when a tag moves to the access network device, wherein the registration request message is used to request to register the tag in a core network, the registration request message comprises identification information of the tag, the identification information of the tag comprises a subscription concealed identifier of the tag, and a part of the subscription concealed identifier of the tag is plaintext information;
sending, by the first mobility management function, a query message to a unified data management function, wherein the query message comprises the identification information of the tag;
receiving, by the first mobility management function, permanent identification information of the tag and identification information of a second mobility management function from the unified data management function, wherein the second mobility management function stores context information of the tag; and
obtaining, by the first mobility management function, the context information that is of the tag and that is indicated by the plaintext information from the second mobility management function based on the permanent identification information of the tag and the identification information of the second mobility management function.

2. The method according to claim 1, wherein the plaintext information comprises one or more of an electronic product code of the tag, a unique identifier of the tag, a permanent identifier of the tag, an external identifier of the tag, or a temporary identifier of the tag.

3. The method according to claim 1, wherein the registration request message further comprises first indication information, the first indication information indicates to query whether there is a mobility management function that stores the context information of the tag, and the receiving, by the first mobility management function, identification information of a second mobility management function from a unified data management function based on the registration request message comprises:
obtaining, by the first mobility management function, the identification information of the second mobility management function from the unified data management function based on the first indication information.

4. The method according to claim 3, wherein the query message comprises the first indication information.

5. The method according to any one of claims 1 to 4, wherein the second mobility management function is the same as the first mobility management function.

6. The method according to any one of claims 1 to 5, wherein the method further comprises:
sending, by the first mobility management function, the context information of the tag to the access network device.

7. The method according to any one of claims 1 to 5, wherein before obtaining, by the first mobility management function, identification information of a second mobility management function from a unified data management function based on the registration request message, the method further comprises:
determining, by the first mobility management function, that the first mobility management function does not store the context information of the tag.

8. A communication apparatus, associated with a first mobility management function, comprising means configured to implement the method in accordance with any one of claims 1 to 7.

9. A chip system associated with a first mobility management function, wherein the chip system comprises at least one processor, the processor is configured to execute a computer program or instructions stored in a memory, and when the computer program or the instructions are executed in the at least one processor, the first mobility management function is caused to perform the steps of the method according to any one of claims 1 to 7.

## Patentansprüche

1. Verfahren zur Tag-Verwaltung, umfassend:
Empfangen, durch eine erste "Mobility Management"-Funktion, einer Registrierungsanforderungsnachricht, die von einer Zugangsnetzvorrichtung gesendet wird, wenn sich ein Tag zur Zugangsnetzvorrichtung bewegt, wobei die Registrierungsanforderungsnachricht verwendet wird, um anzufordern, das Tag in einem Kernnetz zu registrieren, die Registrierungsanforderungsnachricht Identifikationsinformationen des Tags umfasst, die Identifikationsinformationen des Tags einen "Subscription Concealed Identifier" des Tags umfassen und ein Teil des "Subscription Concealed Identifier" des Tags Klartextinformationen sind;
Senden, durch die erste "Mobility Management"-Funktion, einer Abfragenachricht an eine "Unified Data Management"-Funktion, wobei die Abfragenachricht die Identifikationsinformationen des Tags umfasst;
Empfangen, durch die erste "Mobility Management"-Funktion, von permanenten Identifikationsinformationen des Tags und Identifikationsinformationen einer zweiten "Mobility Management"-Funktion von der "Unified Data Management"-Funktion, wobei die zweite "Mobility Management"-Funktion Kontextinformationen des Tags speichert; und
Erhalten, durch die erste "Mobility Management"-Funktion, der Kontextinformationen, die zum Tag gehören und die durch die Klartextinformationen von der zweiten "Mobility Management"-Funktion angegeben werden, auf der Grundlage der permanenten Identifikationsinformationen des Tags und der Identifikationsinformationen der zweiten "Mobility Management"-Funktion.

2. Verfahren nach Anspruch 1, wobei die Klartextinformationen eines oder mehrere von einem elektronischen Produktcode des Tags, einem eindeutigen Identifikator des Tags, einem permanenten Identifikator des Tags, einem externen Identifikator des Tags oder einem temporären Identifikator des Tags umfassen.

3. Verfahren nach Anspruch 1, wobei die Registrierungsanforderungsnachricht ferner erste Angabeinformationen umfasst, wobei die ersten Angabeinformationen angeben, dass abgefragt werden soll, ob es eine "Mobility Management"-Funktion gibt, die die Kontextinformationen des Tags speichert, und wobei das Empfangen, durch die erste "Mobility Management"-Funktion, von Identifikationsinformationen einer zweiten "Mobility Management"-Funktion von einer "Unified Data Management"-Funktion auf der Grundlage der Registrierungsanforderungsnachricht umfasst:
Erhalten, durch die erste "Mobility Management"-Funktion, der Identifikationsinformationen der zweiten "Mobility Management"-Funktion von der "Unified Data Management"-Funktion auf der Grundlage der ersten Angabeinformationen.

4. Verfahren nach Anspruch 3, wobei die Abfragenachricht die ersten Angabeinformationen umfasst.

5. Verfahren nach einem der Ansprüche 1 bis 4, wobei die zweite "Mobility Management"-Funktion dieselbe ist wie die erste "Mobility Management"-Funktion.

6. Verfahren nach einem der Ansprüche 1 bis 5, wobei das Verfahren ferner umfasst:
Senden, durch die erste "Mobility Management"-Funktion, der Kontextinformationen des Tags an die Zugangsnetzvorrichtung.

7. Verfahren nach einem der Ansprüche 1 bis 5, wobei das Verfahren vor dem Erhalten, durch die erste "Mobility Management"-Funktion, von Identifikationsinformationen einer zweiten "Mobility Management"-Funktion von einer "Unified Data Management"-Funktion auf der Grundlage der Registrierungsanforderungsnachricht ferner umfasst:
Bestimmen, durch die erste "Mobility Management"-Funktion, dass die erste "Mobility Management"-Funktion die Kontextinformationen des Tags nicht speichert.

8. Kommunikationsvorrichtung, die einer ersten "Mobility Management"-Funktion zugeordnet ist, umfassend Mittel, die dafür ausgelegt sind, das Verfahren nach einem der Ansprüche 1 bis 7 zu implementieren.

9. Chipsystem, das einer ersten "Mobility Management"-Funktion zugeordnet ist, wobei das Chipsystem mindestens einen Prozessor umfasst, wobei der Prozessor dafür ausgelegt ist, ein Computerprogramm oder Anweisungen, die in einem Speicher gespeichert sind, auszuführen, und wenn das Computerprogramm oder die Anweisungen im mindestens einen Prozessor ausgeführt werden, die erste "Mobility Management"-Funktion veranlasst wird, die Schritte des Verfahrens nach einem der Ansprüche 1 bis 7 durchzuführen.

## Revendications

1. Procédé de gestion d'étiquette, comprenant les étapes consistant à :
recevoir, par une première fonction de gestion de mobilité, un message de demande d'enregistrement envoyé par un dispositif de réseau d'accès lorsqu'une étiquette se déplace vers le dispositif de réseau d'accès, le message de demande d'enregistrement étant utilisé pour demander l'enregistrement de l'étiquette dans un réseau central, le message de demande d'enregistrement comprenant des informations d'identification de l'étiquette, les informations d'identification de l'étiquette comprenant un identifiant caché d'abonnement de l'étiquette, et une partie de l'identifiant caché d'abonnement de l'étiquette étant des informations en texte clair ;
envoyer, par la première fonction de gestion de mobilité, un message d'interrogation à une fonction de gestion de données unifiées, le message d'interrogation comprenant les informations d'identification de l'étiquette ;
recevoir, par la première fonction de gestion de mobilité, des informations d'identification permanente de l'étiquette et des informations d'identification d'une seconde fonction de gestion de mobilité en provenance de la fonction de gestion de données unifiées, la seconde fonction de gestion de mobilité stockant des informations contextuelles de l'étiquette ; et
obtenir, par la première fonction de gestion de mobilité auprès de la seconde fonction de gestion de mobilité, les informations contextuelles relatives à l'étiquette et indiquées par les informations en texte clair, sur la base des informations d'identification permanente de l'étiquette et des informations d'identification de la seconde fonction de gestion de mobilité.

2. Procédé selon la revendication 1, les informations en texte clair comprenant un ou plusieurs éléments parmi un code produit électronique de l'étiquette, un identifiant unique de l'étiquette, un identifiant permanent de l'étiquette, un identifiant externe de l'étiquette et un identifiant temporaire de l'étiquette.

3. Procédé selon la revendication 1, le message de demande d'enregistrement comprenant en outre des premières informations d'indication, les premières informations d'indication indiquant d'interroger s'il existe une fonction de gestion de mobilité qui stocke les informations contextuelles de l'étiquette, et la réception, par la première fonction de gestion de mobilité, d'informations d'identification d'une seconde fonction de gestion de mobilité en provenance d'une fonction de gestion de données unifiées, sur la base du message de demande d'enregistrement, comprenant l'étape consistant à :
obtenir, par la première fonction de gestion de mobilité, les informations d'identification de la seconde fonction de gestion de mobilité auprès de la fonction de gestion de données unifiées, sur la base des premières informations d'indication.

4. Procédé selon la revendication 3, le message d'interrogation comprenant les premières informations d'indication.

5. Procédé selon l'une quelconque des revendications 1 à 4, la seconde fonction de gestion de mobilité étant la même que la première fonction de gestion de mobilité.

6. Procédé selon l'une quelconque des revendications 1 à 5, le procédé comprenant en outre l'étape consistant à :
envoyer, par la première fonction de gestion de mobilité, les informations contextuelles de l'étiquette au dispositif de réseau d'accès.

7. Procédé selon l'une quelconque des revendications 1 à 5, le procédé comprenant en outre, avant l'obtention, par la première fonction de gestion de mobilité auprès d'une fonction de gestion de données unifiées, d'informations d'identification d'une seconde fonction de gestion de mobilité, sur la base du message de demande d'enregistrement, l'étape consistant à :
déterminer, par la première fonction de gestion de mobilité, que la première fonction de gestion de mobilité ne stocke pas les informations contextuelles de l'étiquette.

8. Appareil de communication, associé à une première fonction de gestion de mobilité, comprenant un moyen configuré pour mettre en œuvre le procédé selon l'une quelconque des revendications 1 à 7.

9. Système de puce associé à une première fonction de gestion de mobilité, le système de puce comprenant au moins un processeur, le processeur étant configuré pour exécuter un programme informatique ou des instructions stockées dans une mémoire, et lorsque le programme informatique ou les instructions sont exécutés dans l'au moins un processeur, la première fonction de gestion de mobilité étant amenée à réaliser les étapes du procédé selon l'une quelconque des revendications 1 à 7.
